# EUROPEAN PATENT APPLICATION

(11) **EP 2 197 250 A1**
(43) Date of publication of application: **16.06.2010**
(21) Application number: 08833610.2
(22) Date of filing: 19.09.2008
(51) Int. Cl.: H05B 41/24

(54) **HIGH-VOLTAGE DISCHARGE LAMP LIGHTING APPARATUS, HIGH-VOLTAGE DISCHARGE LAMP LIGHTING METHOD, AND PROJECTOR**

(30) Priority: 27.09.2007 JP 2007250479; 18.03.2008 JP 2008068753; 31.03.2008 JP 2008089760; 12.05.2008 JP 2008124622; 30.06.2008 JP 2008170026
(71) Applicant: Iwasaki Electric Co., Ltd, Tokyo 105-0014 (JP)
(72) Inventor: NISHIZAWA, Yoshio, Gyoda-shi Saitama 361-8505 (JP); SUZUKI, Shinichi, Gyoda-shi Saitama 361-8505 (JP); NAGASE, Toru, Gyoda-shi Saitama 361-8505 (JP); KOMATSU, Yoshiaki, Gyoda-shi Saitama 361-8505 (JP); YAMAZAKI, Yuya, Gyoda-shi Saitama 361-8505 (JP)
(74) Representative: Leinweber & Zimmermann
(86) International application number: PCT/JP2008/067015
(87) International publication number: WO 2009/041367

(57) **Abstract**

A high pressure discharge lamp ballast includes an AC power supply means for supplying a square wave alternating current to a high pressure discharge lamp having a bulb in which first and second electrodes are disposed so as to face each other. In the high pressure discharge lamp ballast, one modulation period (T0) of the square wave alternating current supplied by the AC power supply means comprises a first asymmetrical current period (T1) for melting a protrusion formed at the tip of the first electrode and growing a protrusion formed at the tip of the second electrode, a symmetrical current period (Ts) for conducting current having a positive-negative symmetrical square wave, and a second asymmetrical current period (T2) for growing the first protrusion and melting the second protrusion.

## Description

### TECHNICAL FIELD

The present invention relates to a high pressure discharge lamp ballast and a high pressure discharge lamp driving method for driving a high pressure discharge lamp by supplying an AC lamp current.

### BACKGROUND ART

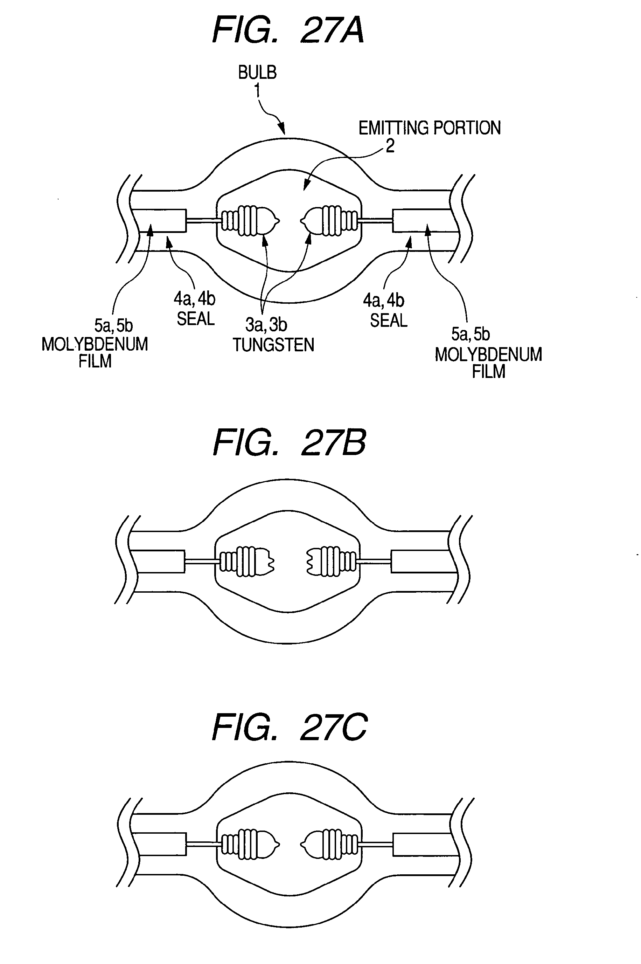

For light source equipment of a liquid crystal projector or the like, a high pressure discharge lamp (called a "lamp" or a "high pressure discharge lamp" below) such as a high-pressure mercury lamp as one shown in Fig. 27A is used. Such a lamp is sealed having a halogen substance, rare gas or mercury provided therein, and a pair of electrodes are disposed in a bulb to face each other. Such a lamp is driven with a square wave current generally at a fixed frequency of 50 Hz to 1 kHz (more generally at 50 Hz to 400 Hz).

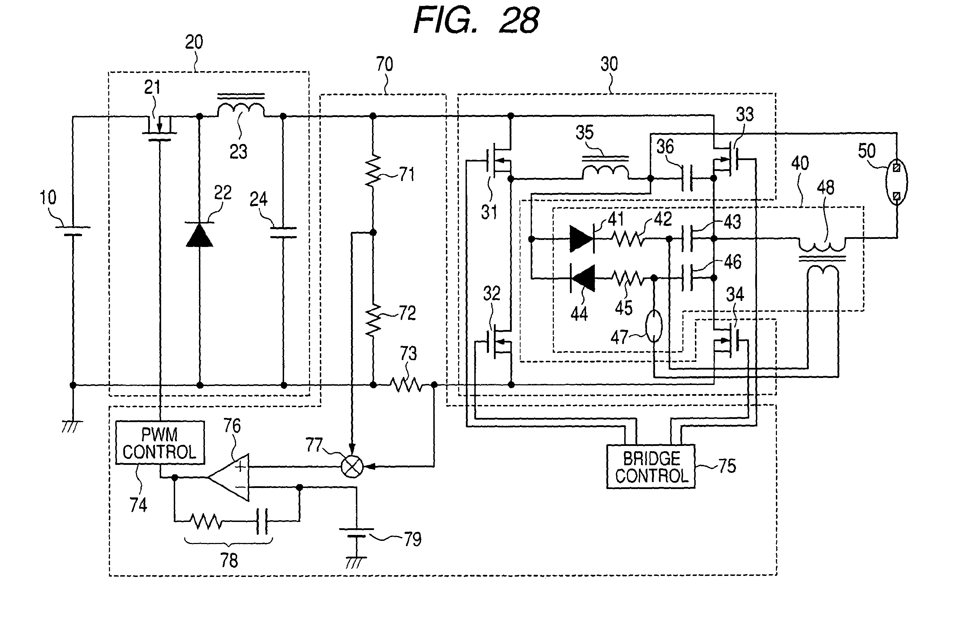

Fig. 28 is a circuit configuration diagram of a general ballast for a high pressure discharge lamp. In a control circuit 70, resistances 71 and 72 form a lamp voltage detection circuit for detecting a lamp voltage, and a resistance 73 is for detecting a lamp current. A detected lamp voltage and a detected lamp current are subjected to multiplication by a multiplier 77, and consequently a lamp power is detected. An output from the multiplier 77 and a voltage from a DC power supply 79 are compared by an error amplifier 76, an output from the error amplifier 76 is inputted to a PWM control circuit 74, and thereby an ON width of a transistor 21 of a step-down chopper circuit 20 is controlled. In this way, constant lamp power control is performed.

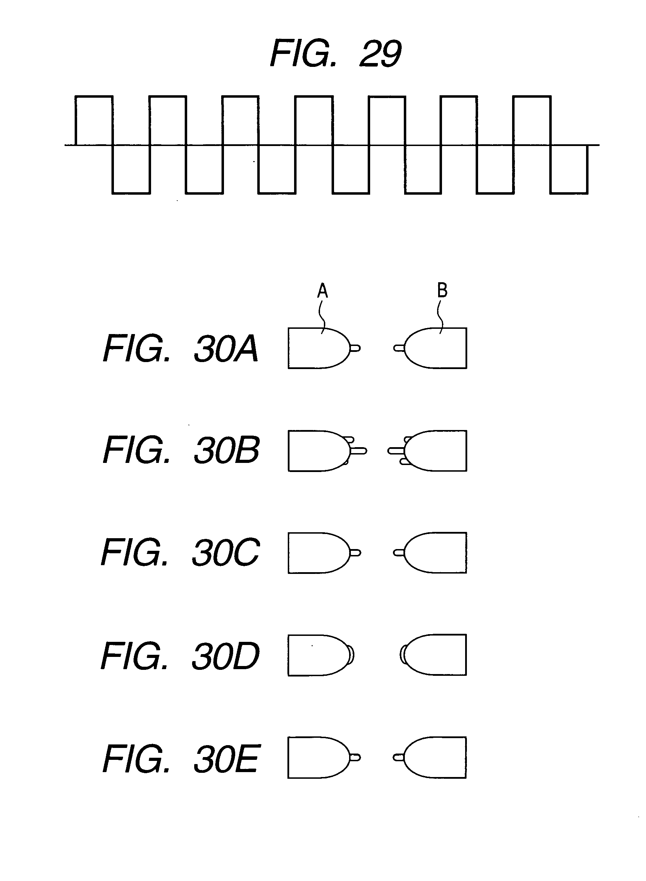

In response to a DC output controlled by the step-down chopper circuit 20, transistors 31 and 34 and transistors 32 and 33 in a full-bridge circuit 30 are alternately turned on/off by a bridge control circuit 75 at a predetermined driving frequency (50 Hz to 400 Hz). Thereby, the DC output from the step-down chopper circuit 20 is converted into an alternating current, and thus a square wave alternating current is supplied to a high pressure discharge lamp 50. As a result, a lamp current waveform as one shown in Fig. 29 is supplied to the high pressure discharge lamp 50.

Here, an ignition circuit 40 operates at the time when discharge of the high pressure discharge lamp 50 starts, and hence does not operate during stable driving after the discharge is started. Since the present invention relates to an operation during the stable driving and the ignition operation is not the essence of the invention, details of the ignition circuit 40 are omitted.

It is known that, when the lamp is continuously driven by an alternating current as that described above, a so-called flicker occurs in which the origin of a discharge arc jumps at a tip of an electrode. The flicker occurs as follows. As driving time progresses, tips of electrodes become rough as shown in Fig. 27B, and thereby the origin of a discharge arc moves among multiple protruding portions at the tip of a corresponding electrode and does not settle at one point.

Heretofore, there have been reported measures to prevent flickers by supplying a current having some special waveform to the lamp. For example, Patent Document 1 discloses measures in which a low-frequency square wave current is used as a base and a pulse current is superimposed on the low-frequency square wave current immediately before completion of each half cycle of the current. By driving a lamp with such a current waveform, a single protrusion as one shown in Fig. 27C, for example, grows at a tip of a corresponding electrode of the lamp, and the origin of an arc settles at the protrusion. In this way, flickers are suppressed.

Although not definite, the mechanism of the phenomenon in which a protrusion grows at the tip of the electrode is assumed as follows. Heated tungsten evaporates, and is coupled with halogen or the like existing in the bulb, thereby forming a tungsten compound. This tungsten compound is diffused from near the bulb wall to near the tips of the electrodes by convection and the like, and is then decomposed into tungsten atoms in a high-temperature section. Thereafter, by being ionized in an arc, the tungsten atoms become cations. The electrodes driven with alternating current alternately serve as an anode and a cathode at each driving frequency. While one of the electrodes is performing a cathode operation, the cations in the arc are attracted toward the cathode by an electric field. The cations are deposited on the tips of both electrodes, and form protrusions.

Here, the lamp is sealed having a halogen substance provided therein so that an appropriate halogen cycle would be performed while the lamp is driven. Such a halogen cycle can prevent: a phenomenon of attachment of tungsten, which is a material of the electrodes and evaporates while the lamp is driven, to an inner wall of the bulb; and blackening of the wall due to the attachment. Moreover, the halogen cycle can be stably performed under a certain temperature condition. Such a stable halogen cycle produces an action of causing the vaporized tungsten to attach to the tip of the corresponding electrode and thereby growing protrusions at the tip of the electrode.

In the case of using the current waveform as that in Patent Document 1, it is certainly confirmed that protrusions which can be the origin of a discharge arc grow at the electrodes. However, adverse effects along with the growing are also observed.
The first adverse effect is a problem of excessive growing of protrusions. When protrusions grow, the distance between the electrodes decreases and a lamp voltage accordingly decreases. Then, if the protrusions excessively grow, the lamp voltage further decreases, and a lamp power cannot be secured in some cases even when a rated lamp current is supplied. This causes a vicious circle that a lamp temperature decreases, the protrusions grow, and consequently the lamp power decreases. This vicious circle may eventually cause a malfunction of the lamp such as lack of illuminance or a short circuit between the electrodes.

Against this first adverse effect, a technique for melting protrusions has been disclosed (Patent Document 2 and Patent document 3). In this technique, a duty ratio or a current value of an AC lamp current is biased toward a positive current or a negative current. Specifically, Patent Document 2 discloses an adjustment method of the distance (gap length) between electrodes. In this method, in a process of manufacturing an AC high pressure discharge lamp, the lamp is driven with an AC lamp current having a positively or negatively biased duty ratio, and thereby excessively long protrusions are melted. In this way, the distance between the electrodes is increased. Patent Document 3 discloses a method of recovering the distance (gap length) between electrodes. In this method, a lamp power, a lamp voltage or the like is detected while a high pressure discharge lamp is driven. When the detected value is equal to or smaller than a predetermined value, it is assumed that protrusions have excessively grown. In this case, by positively or negatively biasing a duty ratio of a lamp current or a lamp current value, the distance between the electrodes is recovered.

In addition, a configuration for maintaining the length of a protrusion within an appropriate range has also been disclosed (Patent Document 4, for example). In this patent document, a protrusion is grown by applying a current in which a pulse is superimposed on a square wave. Then, if the protrusion has excessively grown, a decrease in a lamp voltage due to a decrease in an arc length is detected, and superimpose of the pulse is stopped. With this configuration, it is possible to prevent a situation in which the lamp voltage is excessively decreased due to growth of the protrusion, and hence predetermined illuminance cannot be obtained even if a rated lamp current is supplied. Then, when the protrusion is worn and the lamp voltage is recovered to a predetermined value, control for superimposing a pulse is performed again (it is to be noted that this example is provided as a prior art document on the basis of the idea that growing/melting of a protrusion are repeated, although understanding of mechanisms of growing/melting of a protrusion is different in this example from those in the other patent documents and the present invention).

The second adverse effect is a problem of occurrence of multiple protrusions. Even if the length of each protrusion is moderately maintained, some other protrusion are also formed around the protrusion as shown in Fig. 27B as driving is continued, and the above-described problem of flickers attributable to the multiple protrusions may not be solved in some cases.
For this reason, when a protrusion has grown at a corresponding electrode, it is desirable, instead of maintaining the protrusion, to repeat melting the protrusion, recovering the entire electrode, and then growing a protrusion again.

Against this second adverse effect, a technique has been disclosed to provide an electrode surface recovering period for repeating growing and melting (recovering) a protrusion (Patent Document 5, for example). This patent document discloses to provide, as the electrode surface recovery period, a period for which a lamp current is equal to or higher than a rated current or a period for which a driving frequency is equal to or lower than 5 Hz, at a certain period during a lamp is driven. By the action of the recovery period, an electrode surface is uniformly heated and melted, which prevents an occurrence of multiple protrusions in question.

It is to be noted that Patent Documents 4 and 5 are basically similar in technique, although being described respectively as techniques for preventing the first and second adverse effects above. Hence, an overview of actions obtained by Patent Documents 4 and 5 are estimated as follows.
Fig. 30 includes views schematically showing changes in state of lamp electrode tips in the documents. In Fig. 30, assume that protrusions in a state as a state (a) have grown firstly and then a mode for growing a protrusion is applied to the protrusions. Then, if the protrusion has excessively grown as in a state (b), a mode for melting a protrusion is applied to the protrusion next. Thereafter, the protrusion is melted, and comes into a state (c) and then a state (d). The mode for growing a protrusion is applied to the resultant again and comes into a state (e). Thus, the above-described process is repeated.
Patent Document 1: Published Japanese Translation of PCT International Application No. Hei 10-501919
Patent Document 2: Japanese Patent No. 3847153
Patent Document 3: Japanese Patent Application Publication No. 2003-264094
Patent Document 4: Japanese Patent Application Publication No. 2004-158273
Patent document 5: Japanese Patent No. 3840054

### DISCLOSURE OF THE INVENTION

### PROBLEMS TO BE SOLVED BY THE INVENTION

According to the methods in Patent Document 2 and 3, it is stated that a duty ratio or a current value (i.e., an effective value of current of a positive/negative lamp current), for example, is biased with respect to the polarity of the lamp current, and that thereby an excessively-grown protrusion can be melted regardless of the biased polarity. Specifically, for example, it is stated that the distance (gap length) between a first electrode and a second electrode can be increased by increasing a current from the first electrode to the second electrode (or vise versa), regardless of which one of protrusions at the first and second electrodes has grown.

However, in practice, for example, when a current from the first electrode to the second electrode is increased (i.e., a current is increased while the first electrode serves as an anode) and a current from the second electrode to the first electrode is decreased (i.e., a current is decreased while the first electrode serves as a cathode), a protrusion at the first electrode melts while a protrusion at the second electrode does not melt. This is based on the following reason. In the above-described case, when the first electrode serves as an anode, the protrusion at the first electrode tends to melt while the protrusion at the second electrode increasingly tends to grow. Meanwhile, when a current is decreased while the first electrode serves as a cathode, the opposite tendency is decreased (the tendency that the protrusion at the first electrode grows while the protrusion at the second electrode melts). As a result, the protrusion at the first electrode further melts, and the protrusion at the second electrode further grows.
Thus, it is originally necessary to increase a current in a period when the electrode having an excessively-grown protrusion serves as an anode, and to decrease a current in a period when the electrode having a not-grown protrusion serves as an anode. However, if the polarities are reversed, the excessively-grown protrusion is further grown and the electrode having the not-grown protrusion is worn, consequently.

In consideration of the above-described circumstance, it is necessary to identify one having a protrusion which has grown from the two electrodes, and to melt only the protrusion which has grown at the electrode thus identified. However, it is at least not possible to electrically detect, i.e., to detect on a driving circuit side, an electrode having a protrusion which has grown. Accordingly, in order to determine the polarity of a current to be increased, a visual judgment before driving is used, and such a judgment and control cannot be performed while in use generally.

As to Patent Documents 4 and 5, it is difficult in reality to instantaneously stop growing of protrusions from both electrodes when the protrusions have reached appropriate lengths in a state of (b) in Fig. 30. This is based on the following reasons. Firstly, if a sampling period is elongated to increase the accuracy in detecting a lamp voltage, control (response) is delayed. Naturally, if a sampling period is shortened, response can be quicker while the detection accuracy becomes lower, consequently causing a malfunction in control or the like. Secondly, behaviors of protrusions do not immediately follow control from the ballast. Specifically, in a state
where protrusions grow from both electrodes, the growing may not stop immediately after a lamp current value is increased to a rated value at the moment when the growing of the protrusions is desired to be stopped (an overshoot state may occur), in some cases. As a result, a problem arises that the above-described adverse effect of excessive growing of protrusions cannot be appropriately prevented.

Hence, concerning protrusions for preventing flickers, there have been desired reliable and simple measures for solving the problem of excessive growing of protrusions and the problem of multiple protrusions.
Additionally, as will be described later, long-lasting effective measures which are not affected by a selected driving frequency and a life of a lamp is desired.

In general, a driving state of a lamp is different between a period of several minutes from when driving is started until the state comes into a stable driving (called a "start-up period" below) and a period of stable driving after the start-up period. Normally, a lamp voltage is only approximately 10 V or so immediately after driving is started. Then, in the start-up period, the lamp voltage increases and consequently reaches stable driving (the lamp voltage becomes 70 V or the like, for example).
In a standard ballast, driving with a rated lamp current (constant current control) is performed in a start-up period, while driving for maintaining a lamp power around a rated value (constant-power control) is performed during stable driving. In other words, the lamp current is maintained around a maximum rated value in the start-up period, and is set lower than that during stable driving (except for a case in which the lamp voltage is extremely low).

Hence, even if the same lamp current waveform is applied, the action is different between the start-up period supplied with a large lamp current and the stable driving period supplied with a lamp current smaller than that. Accordingly, this needs to be taken into consideration in designing a ballast.

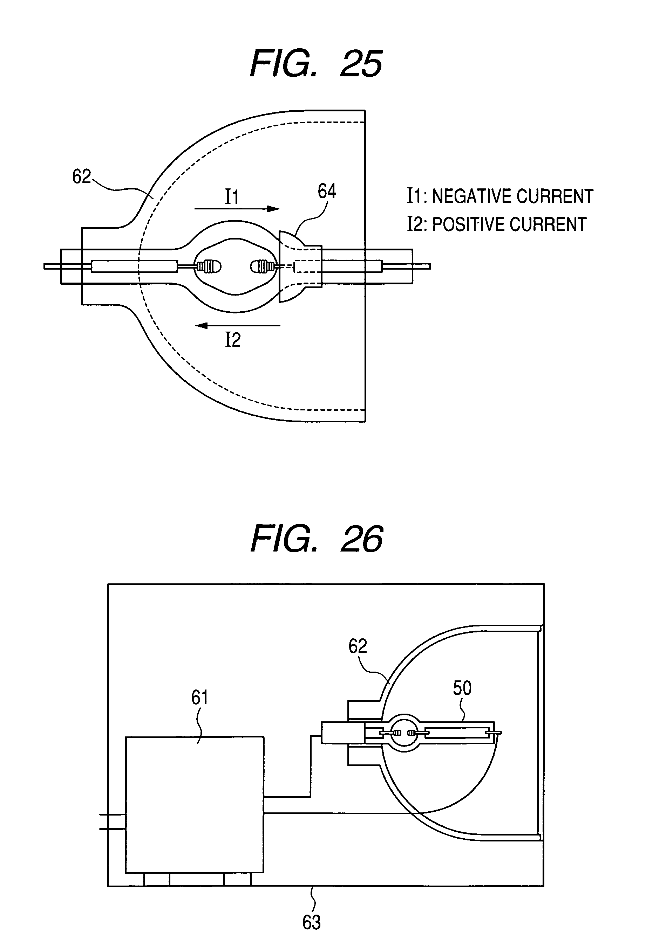

Moreover, the inventors recognized that growing/melting behaviors of protrusions were also affected by a temperature distribution of the lamp (more specifically, the temperature difference between electrodes). Specifically, a lamp is generally provided with a reflector. As to an electrode on a neck side, which is a high temperature side, of the reflector (an electrode on the left side in Fig. 26) and an electrode on an opening side, which is a low temperature side, thereof (an electrode on the right side in Fig. 26), it has been found that a protrusion melts faster at the neck-side electrode than at the opening-side electrode while a protrusion grows faster at the opening-side electrode than at the neck-side electrode. This tendency appears more prominently when a cooling effect of an air-cooling fan is exerted in a case of using a high pressure discharge lamp ballast and a lamp for a projector.
Here, it was confirmed that, although growing of a projection was limited, melting of a projection was developed into wear of the electrode main body. Accordingly, if the same electrical or electronic operation is applied to both electrodes, wear of the neck-side electrode becomes larger. However, by taking measures against this, an improvement in the life of the lamp can be expected. Thus, a driving method needs to be developed in consideration of this temperature difference between electrodes in addition to the above-described problems.

Hence, considering protrusions for preventing flickers, there have been desired measures to solve the problem attributable to a temperature difference between electrodes.

### MEANS FOR SOLVING THE PROBLEMS

A first aspect of the present invention is a high pressure discharge lamp ballast including an AC power supply unit for supplying a square wave alternating current to a high pressure discharge lamp including a bulb in which first and second electrodes are disposed so as to face each other. In the ballast, one modulation period T0 of the square wave alternating current supplied by the AC power supply unit includes: a first asymmetrical current period T1 for melting a protrusion formed at a tip of the first electrode and growing a protrusion formed at a tip of the second electrode; a symmetrical current period Ts for conducting a positive-negative symmetrical square wave; and a second asymmetrical current period T2 for growing the first protrusion and melting the second protrusion.

The high pressure discharge lamp ballast is **characterized in that**, in a case of assuming that a current flowing from the first electrode to the second electrode is a positive current and a current flowing the other way round is a negative current, a duty of the positive current is larger than a duty of the negative current in the first asymmetrical current period T1, the duties of the positive current and the negative current are equal to each other in the symmetrical current period Ts, and the duty of the negative current is larger than the duty of the positive current in the second asymmetrical current period T2.
Moreover, the AC power supply unit may include: a detection circuit for detecting a lamp parameter of the high pressure discharge lamp; and a mode control circuit for controlling a frequency in the period Ts in accordance with the lamp parameter.
Furthermore, the high pressure discharge lamp ballast is **characterized in that** the detection circuit includes a lamp voltage detection circuit for detecting a lamp voltage as the lamp parameter, the mode control circuit is configured to apply a normal mode until the lamp voltage decreases to a predetermined value V1 or smaller, apply a voltage decrease countermeasure mode until the lamp voltage recovers to a predetermined value V2 (V1<V2) after having decreased to the predetermined value V1 or smaller, and apply the normal mode after the lamp voltage has recovered to the predetermined V2 or more, and the frequency in the symmetrical current period Ts in the voltage decrease countermeasure mode is higher than the frequency in the symmetrical current period Ts in the normal mode.

Additionally, the AC power supply unit may include: a detection circuit for detecting a lamp parameter of the high pressure discharge lamp; and a mode control circuit for controlling, in accordance with the lamp parameter, a ratio of the number of cycles included in the period Ts to the total number of cycles included in the period T0.
Moreover, the high pressure discharge lamp ballast is **characterized in that** the detection circuit includes a lamp voltage detection circuit for detecting a lamp voltage as the lamp parameter, the mode control circuit is configured to apply a normal mode until the lamp voltage decreases to a predetermined value V1 or smaller, apply a voltage decrease countermeasure mode until the lamp voltage recovers to a predetermined value V2 (V1<V2) after having decreased to the predetermined value V1 or smaller, and apply the normal mode after the lamp voltage has increased to the predetermined V2 or more, and the ratio of the number of cycles included in the symmetrical current period Ts to the number of cycles included in the period T0 in the voltage decrease countermeasure mode is larger than the ratio of the number of cycles included in the symmetrical current period Ts to the number of cycles included in the period T0 in the normal mode.

A second aspect of the present invention is a high pressure discharge lamp ballast including an AC power supply unit for supplying a square wave alternating current to a high pressure discharge lamp including a bulb in which first and second electrodes are disposed so as to face each other. In the ballast, in a case of assuming that a current flowing from the first electrode to the second electrode is a positive current and a current flowing the other way round is a negative current, one modulation period T0 of the square wave alternating current supplied by the AC power supply unit includes: a first asymmetrical current period T1 in which an effective value of a half cycle of the positive current is larger than an effective value of a half cycle of the negative current; and a second asymmetrical current period T2 in which the effective value of the half cycle of the negative current is larger than the effective value of the half cycle of the positive current.

A third aspect of the present invention is a high pressure discharge lamp ballast including: an AC power supply unit for supplying a square wave alternating current to a high pressure discharge lamp including a bulb in which first and second electrodes are disposed so as to face each other; a detection unit for detecting a lamp parameter for driving of the high pressure discharge lamp; and a switching unit for switching an output state of the AC power supply unit. In the ballast, the switching unit is configured to keep the output state in a first output state from driving start until the lamp parameter satisfies a predetermined condition and to switch from the first output state to a second output state after the lamp parameter has satisfied the predetermined condition, at least the square wave alternating current in the second output state includes a first asymmetrical current period T1 for melting a protrusion formed at a tip of the first electrode and growing a protrusion formed at a tip of the second electrode, and a second asymmetrical current period T2 for growing the first protrusion and melting the second protrusion, the first and second asymmetrical current periods T1 and T2 being repeated in a predetermined cycle, and asymmetry of a waveform of the square wave alternating current in the first output state is smaller than that of a waveform of the square wave alternating current in the second output state.

Here, the AC power supply unit includes: a DC output unit for determining a current value of the square wave alternating current; and an AC conversion unit for controlling polarity inversion of the square wave alternating current, and, in a case of assuming that a current flowing from the first electrode to the second electrode is a positive current and a current flowing the other way round is a negative current, the square wave alternating current is formed by the DC output unit and the AC conversion unit so that an integral value (X⁺) of the positive current would be larger than an integral value (X⁻) of the negative current in the first asymmetrical current period T1 while the integral value (X⁻) of the negative current would be larger than the integral value (X⁺) of the positive current in the second asymmetrical current period T2, in the second output state and a difference between X⁺ and X⁻ in the first output state is smaller than a difference between X⁺ and X⁻ in the second output state.

The AC conversion unit further includes a control unit for adjusting a duty ratio between a positive current and a negative current, the control unit is configured so that a duty (D⁺) of the positive current would be larger than a duty (D⁻) of the negative current in the first asymmetrical current period T1 while the duty of the negative current (D⁻) would be larger than the duty (D⁺) of the positive current in the second asymmetrical current period T2, in the second output state, and a difference between D⁺ and D⁻ in the first output state is smaller than a difference between D⁺ and D⁻ in the second output state.
Furthermore, the AC power supply unit may include an AC conversion unit for controlling polarity inversion of the square wave alternating current, the first and second asymmetrical current periods T1 and T2 may be asymmetrical square wave currents intermittently repeated in a predetermined cycle with a symmetrical current period Ts interposed therebetween, the symmetrical current period Ts being for conducting a positive-negative symmetrical square wave, and the AC conversion unit may be configured so that a ratio of the number of cycles included in the symmetrical current period Ts to the number of cycles included in the periods T1 and T2 in the first state would be smaller than a ratio of the number of cycles included in the symmetrical current period Ts to the number of cycles included in the periods T1 and T2 in the second output state.

Additionally, the square wave alternating current in the first output state is a positive-negative symmetrical wave.
Moreover, a frequency of the square wave alternating current in the first output state is 50 Hz to 1 kHz.

A fourth aspect of the present invention is a method of driving a high pressure discharge lamp in a high pressure discharge lamp ballast including: an AC power supply unit for supplying a square wave alternating current to a high pressure discharge lamp including a bulb in which first and second electrodes are disposed so as to face each other; a detection unit for detecting a lamp parameter for driving of the high pressure discharge lamp; and a switching unit for switching an output state of the AC power supply unit, the driving method including: (A) the step of keeping the output state in a first output state from driving start until the lamp parameter satisfies a predetermined condition; and (B) the step of switching from the first output state to a second output state by the switching unit after the lamp parameter has satisfied the predetermined condition. In the driving method, the square wave alternating current in the second output state includes a first asymmetrical current period T1 for melting a protrusion formed at a tip of the first electrode and growing a protrusion formed at a tip of the second electrode, and a second asymmetrical current period T2 for growing the first protrusion and melting the second protrusion, the first and second asymmetrical current periods T1 and T2 being asymmetrical square wave currents continuously or intermittently repeated in a predetermined cycle, and asymmetry of the square wave alternating current in the first output state is smaller than that of the square wave alternating current in the second output state.

A fifth aspect of the present invention is a high pressure discharge lamp ballast which includes an AC power supply unit for supplying a square wave alternating current to a high pressure discharge lamp including a bulb in which first and second electrodes are disposed so as to face each other, and in which the first electrode is higher in temperature than the second electrode when a current waveform is positive-negative symmetrical in a case of assuming that a current flowing from the first electrode to the second electrode is a positive current and a current flowing the other way round is a negative current, the high pressure discharge lamp ballast. In the ballast, the AC power supply unit includes: a DC output unit for determining a current value of the square wave alternating current; and an AC conversion unit for controlling polarity inversion of the square wave alternating current, and the square wave alternating current is formed by the DC output unit and the AC conversion unit so that a current-time product of the positive current would be larger than a current-time product of the negative current in a first asymmetrical current period T1 while the current-time product of the negative current would be larger than the current-time product of the positive current in a second asymmetrical current period T2, the first asymmetrical current period T1 and the second asymmetrical current period T2 being repeated in a predetermined cycle, and so that the total of current-time products of the positive current would be smaller than the total of current-time products of the negative current in one cycle of the predetermined cycle.

Here, the first electrode is disposed on a neck side of a reflector, and the second electrode is disposed on an opening side of the reflector.
Furthermore, the square wave alternating current further includes a symmetrical current period Ts having a positive-negative symmetrical square wave, between the first asymmetrical current period T1 and the second asymmetrical current period T2.
Moreover, the AC conversion unit includes a control unit for adjusting a duty ratio between the positive current and the negative current, and the control unit is configured so that a duty of the positive current would be larger than a duty of the negative current in the first asymmetrical current period T1 while the duty of the negative current would be larger than the duty of the positive current in the second asymmetrical current period T2, and so that an average duty of the positive current would be smaller than an average duty of the negative duty in one cycle of the predetermined cycle.
Additionally, a duty difference between the positive current and the negative current in the first asymmetrical current period T1 is equal to a duty difference between the negative current and the positive current in the second asymmetrical current period T2, and the first period T1 is shorter than the second period T2.

The sixth aspect of the present invention is a projector including: the ballast for driving a high pressure discharge lamp according to the first, second, third, or fifth aspect; the high pressure discharge lamp; a reflector; and a case including therein the high pressure discharge lamp ballast and the reflector.

### BRIEF DESCRIPTION OF THE DRAWINGS

[Fig. 1A] Fig. 1A is a view showing a lamp current waveform according to a first example of the present invention I.
[Fig. 1B] Fig. 1B is a view explaining the lamp current waveform.
[Fig. 2] Fig. 2 includes views explaining the present invention I.
[Fig. 3] Fig. 3 is a view showing a lamp current waveform according to a second example of the present invention I.
[Fig. 4] Fig. 4 is a view showing a lamp current waveform according to a third example of the present invention I.
[Fig. 5] Fig. 5 includes views each showing a lamp current waveform according to a fourth example of the present invention I.
[Fig. 6A] Fig. 6A is a flowchart explaining the present invention I.
[Fig. 6B] Fig. 6B is a flowchart explaining the present invention I.
[Fig. 7] Fig. 7 includes views explaining a present invention II.
[Fig. 8] Fig. 8 includes views each showing a lamp current waveform according to the present invention II.
[Fig. 9] Fig. 9 is a circuit configuration diagram according to the present invention II and a present invention III.
[Fig. 10] Fig. 10 is a flowchart explaining the present invention II.
[Fig. 11] Fig. 11 is a view showing a lamp current waveform according to an example of the present invention III.
[Fig. 12] Fig. 12 is a view showing a lamp current waveform according to the example of the present invention III.
[Fig. 13] Fig. 13 is a flowchart explaining the present invention III.
[Fig. 14] Fig. 14 is a timing chart explaining the present invention III.
[Fig. 15] Fig. 15 is a diagram showing a fifth example of a present invention IV.
[Fig. 16] Fig. 16 is a graph showing the fifth example of the present invention IV.
[Fig. 17] Fig. 17 is a flowchart explaining the present invention IV.
[Fig. 18] Fig. 18 is a view showing a lamp current waveform according to a first example of a present invention V.
[Fig. 19] Fig. 19 is a view showing a lamp current waveform according to a second example of the present invention V.
[Fig. 20A] Fig. 20A is a view showing a lamp current waveform according to a third example of the present invention V.
[Fig. 20B] Fig. 20B is a view showing a lamp current waveform according to the third example of the present invention V.
[Fig. 21] Fig. 21 is a view showing a lamp current waveform according to a fourth example of the present invention V.
[Fig. 22] Fig. 22 is a view showing a lamp current waveform according to a fifth example of the present invention V.
[Fig. 23A] Fig. 23A is a view showing a lamp current waveform according to a sixth example of the present invention V.
[Fig. 23B] Fig. 23B is a view showing a lamp current waveform according to the sixth example of the present invention V.
[Fig. 23C] Fig. 23C is a view showing a lamp current waveform according to the sixth example of the present invention V.
[Fig. 23D] Fig. 23D is a view showing a lamp current waveform according to the sixth example of the present invention V.
[Fig. 24A] Fig. 24A is a flowchart of a driving method according to the present invention V.
[Fig. 24B] Fig. 24B is a flowchart of a driving method according to the present invention V.
[Fig. 25] Fig. 25 is a view explaining a subreflector.
[Fig. 26] Fig. 26 is a view of a lighting device of the present invention.
[Fig. 27A] Fig. 27A is a view showing a change of electrodes of a high pressure discharge lamp.
[Fig. 27B] Fig. 27B is a view explaining a change of electrodes of a high pressure discharge lamp.
[Fig. 27C] Fig. 27C is a view explaining a change of electrodes of a high pressure discharge lamp.
[Fig. 28] Fig. 28 is a circuit configuration diagram of a general high pressure discharge lamp ballast.
[Fig. 29] Fig. 29 is a view showing a lamp current waveform of the general high pressure discharge lamp ballast.
[Fig. 30] Fig. 30 includes views showing changes of electrodes of a conventional high pressure discharge lamp.

### EXPLANATION OF REFERENCE NUMERALS

- 1:: bulb
- 10:: DC power supply
- 15:: detection unit
- 16:: switching unit
- 20:: step-down chopper circuit
- 30:: full-bridge circuit
- 40:: ignition circuit
- 50:: high pressure discharge lamp
- 61:: high pressure discharge lamp ballast
- 62:: reflector
- 63:: case
- 64:: subreflector
- 70:: control circuit
- 71,: 72, 73: resistance
- 74:: PWM control circuit
- 75:: bridge control circuit
- 76:: error amplifier
- 77:: multiplier
- 78:: integration circuit
- 79:: DC power supply
- 700:: mode control circuit
- A, B:: electrode

### BEST MODES FOR CARRYING OUT THE INVENTION

### «Invention I. Basic Embodiment»

Since a circuit configuration and a basic operation of a ballast of this invention are the same as those of the circuit according to the conventional example shown in Fig. 28, description thereof are omitted.

### Example 1.

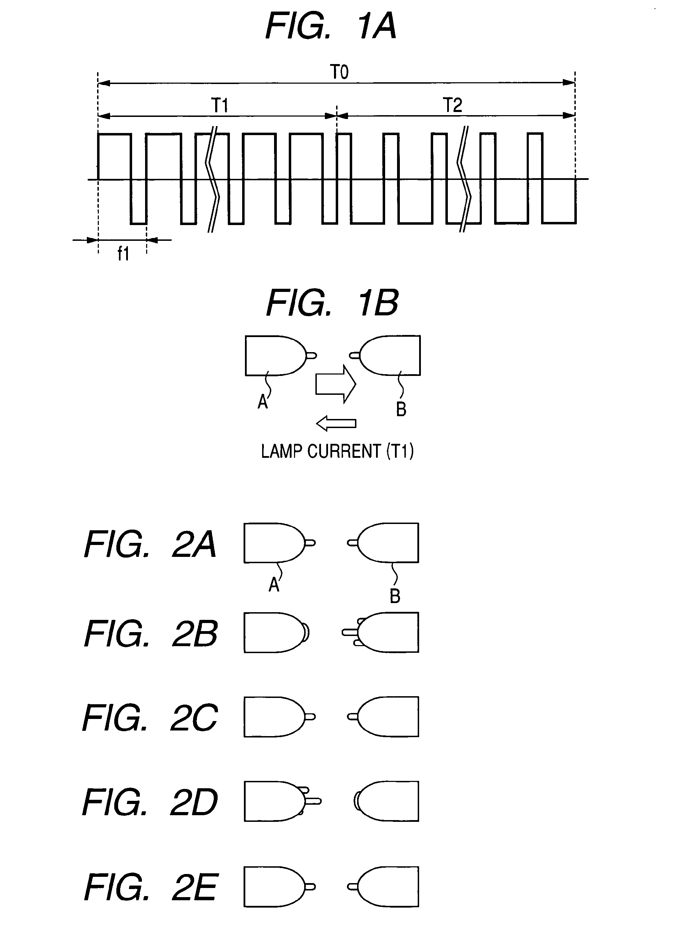

Fig. 1A is a lamp current waveform of a high pressure discharge lamp according to Invention I. As shown in Fig. 1A, the lamp current is a square wave alternating current at a constant frequency f1, and is a square-wave modulated current having a modulation cycle T0. The modulation cycle T0 includes asymmetrical current periods T1 and T2. While the frequency of the current inversion is the same at the frequency f1 throughout the periods T1 and T2, timing (duty ratio) at which the current polarity is switched within one cycle is different between the period T1 and the period T2. Specifically, a positive-current duty is greater than a negative-current duty in the period T1, while the relationship is reversed in the period T2. Here, the duty ratio is controlled by a bridge control circuit 75.

Fig. 1B is a view explaining growing and melting of protrusions in the period T1 of Fig. 1A. In the following explanation, a current from an electrode A to an electrode B is assumed to be a positive current. As described above, tungsten evaporates and thereby a protrusion melts on the anode side, while tungsten is attracted and thereby a protrusion grows on the cathode side. Accordingly, as shown in Fig. 1B, when the current is increased while the electrode A is serving as an anode, a tendency in which a protrusion at the electrode A melts and a protrusion at the electrode B grows increases. Meanwhile, when the current is decreased while the electrode A is serving as a cathode, the reverse tendency (the protrusion at the electrode A grows and the protrusion at the electrode B melts) decreases. Accordingly, the protrusion at the electrode A melts and the protrusion at the electrode B grows in the period T1, while the reversed tendency occurs, i.e., the protrusion at the electrode A grows and the protrusion at the electrode B melts, in the period T2.

The average duty ratio in the repeating cycle T0 is desirably 50% to 50%. This is because such an average duty ratio allows the protrusions at the electrodes A and B to equally grow and melt.
Moreover, the positive-current duty is desirably set at approximately 80% or lower in the period T1. Similarly, the negative current duty is also desirably set at approximately 80% or lower in the period T2. This is because, if one duty is set excessively large, the driving state becomes close to that of DC driving, and such a driving state is not preferable in terms of characteristics of an AC-driven lamp.

As to the cycle T0, it was confirmed, from an experiment by the inventors, that effect was observed when T0 = approximately 0.6 to 0.7 s. Nevertheless, it is preferable that the value of T0 be appropriately set according to the characteristics of a lamp to be driven. For example, T0 needs to be set longer if a lamp to be driven has a tendency to not easily grow/melt, while T0 needs to be set shorter if a lamp to be driven has a tendency to easily grow/melt. Furthermore, the value of T0 is also set differently depending on the original setting for the distance between the electrodes. A shorter distance between the electrodes requires a shorter T0 to frequently repeat growing/melting. Hence, T0 may be set within the range of several hundred ms to several minutes according to each case.

In the conventional technique, the distance between the electrodes (i.e., arc length) excessively grows in the state (b) as shown in Fig. 30. By contrast, in this invention, the distance between the electrodes are maintained substantially the same throughout the states (a) to (e) as shown in Fig. 2. Thus, it is possible to provide measures to keep a lamp voltage substantially the same by distinguishing the state (d) in Fig. 30 and the end of life, in consideration of such a state as the state (b) in Fig. 30 where the distance between the electrodes would be significantly reduced.

Fig. 2 shows changes in the state of the lamp electrode tips in the above-described example. Assume that protrusions as in the state (a) have grown first. Then, when the positive-current duty is increased, the electrodes enter the state (b). Subsequently, when the negative-current duty is increased, the electrodes enter the state (c) and then the state (d). When the positive-current duty is increased again, the electrodes enter the state (e) (return to the state (a)). Naturally, Fig. 2 shows the principle of this invention in an exaggerated manner. In practice, visually identifiable growing/melting of protrusions does not always occur.

Here, while the distance between the electrodes (i.e., arc length) greatly changes through the states (a) to (e) in the conventional technique in Fig. 30, the distance between the electrodes are kept substantially the same throughout the states (a) to (e) in Fig. 2 of this invention. Hence, it is not necessary to take into account such a state as the state (b) in Fig. 30 where the distance between the electrodes would be significantly reduced, or to provide measures by distinguishing the state (d) in Fig. 30 and the end of life. Here, even if growing/melting of protrusions is observed in the case of performing driving with each of the positive/negative-current duties accounting for 50%, at a driving frequency within the range of 50 Hz to 400 Hz, the growing/melting is relatively slow. Thus, a change in duty ratio bias (i.e., effective-value bias) is a dominant factor of growing and melting of protrusions.

As described above, protrusions of the pair of electrodes alternately grow/melt in parallel according to this example. Thus, even if one of the protrusions excessively grows, the other protrusion melts, and hence the problem of excessive growing of protrusions as in the conventional example does not occur. Moreover, since the lamp voltage is within a small variation range compared with the conventional example (if no wear of the electrodes due to their lives occurs, the lamp voltage is the same in principle), a rated lamp power is secured by supplying a rated lamp current. Furthermore, since detection of the lamp voltage is not needed for control of growing/melting of protrusions, simple and stable control can be performed (of course, detection of the lamp voltage may be needed in some cases for other purposes such as detection of the end of life).

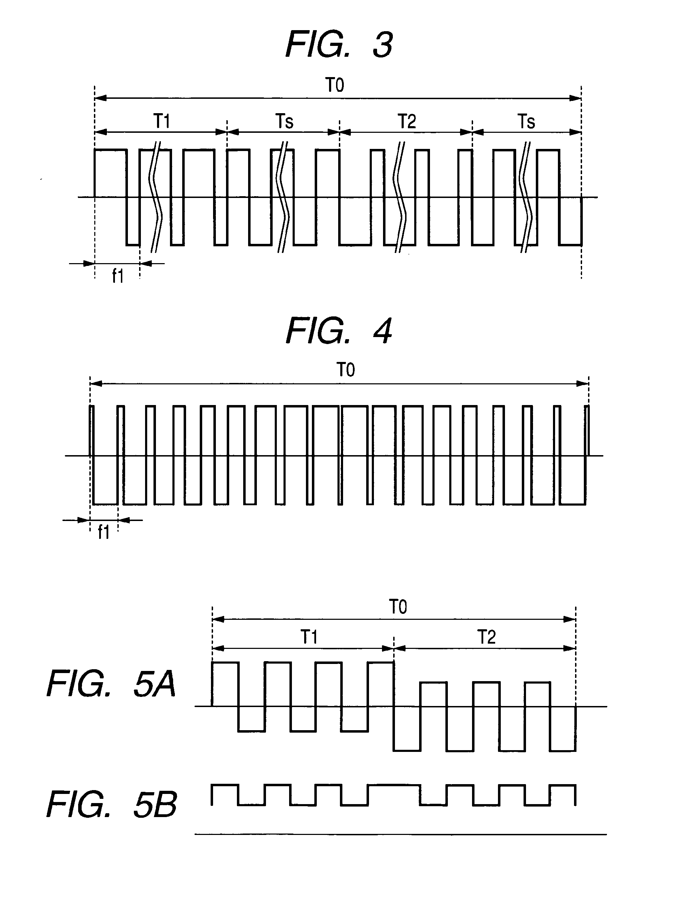

Example 2.
A view of a waveform according to another example of Invention I is shown in Fig. 3. In Fig. 3, a symmetrical current period (Ts) having a duty ratio of 50% is inserted between the two asymmetrical current periods (T1, T2) having different duty ratios. In this case as well, the same effects as the current waveform in Fig. 1 can be obtained.
This example is effective when it is desired to obtain the effects of growing and melting while reducing the degrees of growing and melting according to the characteristics of the electrodes.

Based on the result of a life test and the like, the technical significance of the positive/negative symmetrical period (Ts) can be described as follows.
(1) When the positive/negative symmetrical period (Ts) is not inserted, there are only two kinds of states of the electrodes, i.e., a state in which the electrode operation temperature is high (load is heavy) and a state in which the electrode operation temperature is low. However, when Ts is inserted, there are three kinds of states, i.e., states in which the electrode operation temperature is high, medium (Ts) and low. This makes it possible to reduce the ratio of time in which the electrodes operate at a high temperature. Thereby, load imposed on the electrodes can be reduced.
(2) By providing this Ts, the temperature gradient occurring in the lamp (bulb) by the duty asymmetrical waveform is made gentle, and hence the probability of explosion of the lamp due to thermal strain can be reduced.
(3) A general method of lamp voltage control using square wave driving (i.e., adjusting the lamp voltage by controlling a driving frequency, and the like) can be applied to duty-modulated driving. For example, by controlling the frequency and the number of cycles of the positive/negative symmetrical period (Ts), the above-described lamp voltage control can be performed. This will be described in detail in Invention II.

### Example 3.

Fig. 4 shows a view of a square-wave modulated current waveform according to another example of Invention I. In Fig. 4, the duty ratio is continuously increased/decreased over time. In this case as well, the same effects as the current waveform in Fig. 1 can be obtained.
This example has advantages that, since no abrupt modulation in the lamp current waveform occurs, control switching is not visually identified and unnecessary noise attributable to the switching does not occur.

### Example 4.

Fig. 5 shows a view of a square-wave modulated current waveform according to another example of Invention I. As shown in Fig. 5(a), in this example, while the lamp current waveform is controlled to have a fixed duty ratio of 50% by the bridge control circuit 75, an effective value of the lamp current for a half cycle is increased/decreased by the PWM control circuit 74. In this case as well, the same effects as the current waveform in Fig. 1 can be obtained.

In this example, although an inexpensive bridge driver IC can be used since duty control does not need to be performed by the bridge control circuit 75, the current capacity of the step-down chopper circuit 20 needs to be large.
Moreover, unlike the examples in which the duty ratio is changed, changes in absolute value of the lamp current appear in optical output as shown in Fig. 5(b). For this reason, in order to prevent the changes in the optical output from being visually identified, the driving frequency needs to be set relatively high (for example, 100 Hz or higher, more preferably 200 Hz or higher).

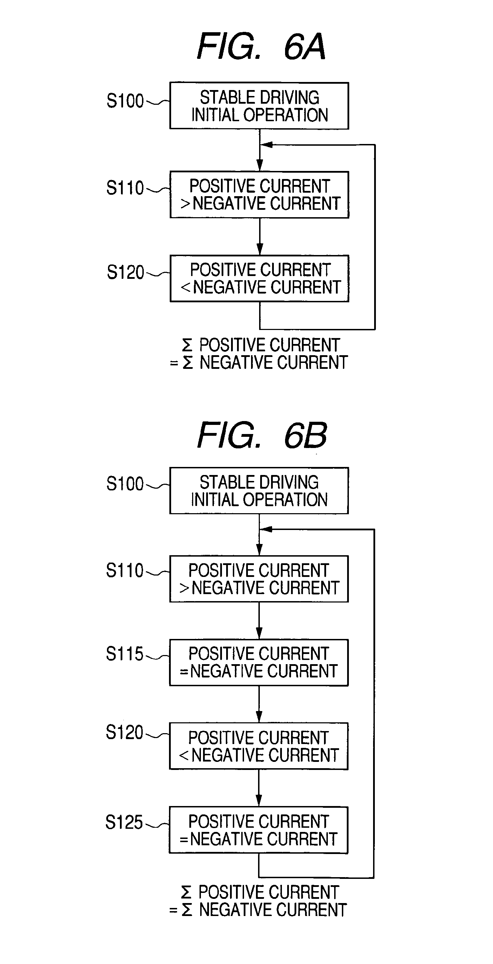

Fig. 6A is a flowchart showing a driving method according to Invention I. The flowchart shows operations when the driving state has reached a stable driving state after the ignition operation performed when lamp discharge started.
In Step S100, an initial operation of stable driving is performed. The electrode tips are assumed to be in the state (d) in Fig. 2 at the completion of this step.
In Step S110, such an asymmetrical current is supplied that a protrusion at the electrode A would melt while a protrusion at the electrode B would grow (period T1). Specifically, the current waveform is formed so that positive current > negative current.
In Step S120, such an asymmetrical current is supplied that the protrusion at the electrode A would grow while the protrusion at the electrode B would melt (period T2). Specifically, the current waveform is formed so that positive current < negative current.
It is to be noted that each of the asymmetrical currents here corresponds to any one of the current waveforms in Fig. 1, Fig. 3 and Fig. 5. As to the current waveform in Fig. 4, the period in which the positive current is larger than the negative current corresponds to Step S110 while the period in which the positive current is smaller than the negative current corresponds to Step S120.

Then, Steps S110 and S120 are repeated in the cycle T0. Here, the effective value (integral value) of the positive current and the effective value (integral value) of the negative current in one loop are set to be equal.

Alternatively, as shown in Fig. 6B, Steps S115 and S125 of supplying a symmetrical square wave current (i.e. positive current = negative current) may be inserted respectively after Steps S110 and S120 so as to correspond to the current waveform in Fig. 3 (period T3). Then, Steps S110 and S120 are repeated in the cycle T0. In this case as well, the effective value (integral value) of the positive current and the effective value (integral value) of the negative current in one loop are set to be equal.

The above-described method enables protrusions of the pair of electrodes to alternately grow/melt in parallel. Accordingly, it is possible to solve the problem of lack of illuminance or the like due to excessive growing of protrusions while preventing flickers.

The above-described examples have been presented as the most preferable examples of Invention I. Related to this respect, the following notes are provided.
(1) The step-down chopper circuit 20 presented as a DC output unit may be a different known circuit type (for example, flyback type or the like). Similarly, the full-bridge circuit 30 presented as an AC conversion unit may also be a different known circuit type (for example, a push-pull type or the like).
(2) Each of the asymmetrical square wave currents in the above-described examples may be a compound current formed by appropriately combining the waveforms in Figs. 1, 3, 4 and 5. Specifically, the current may be configured to have an asymmetrical waveform in which the effective value of the positive current and the effective value of the negative current are cyclically biased while keeping the two effective values relatively equal in one modulation cycle.

### «Invention II. Control in Symmetrical Current Period Ts»

Here, a halogen cycle will be described briefly. It is known that a halogen cycle is stably performed under a certain temperature condition. The temperature condition can be changed depending on the lamp current waveform, the driving frequency and the lamp air-cooling method. Moreover, it is known, from an experiment, that, when the temperature condition is drastically changed, the halogen cycle is activated and thereby protrusions temporarily grow or melt. For example, in the case of switching the waveform or frequency at which electrodes are driven, from one for increasing the temperature to one for lowering the temperature, protrusions temporarily grow, although also depending on a temperature change rate. In the reversed case, the protrusions temporarily melt.

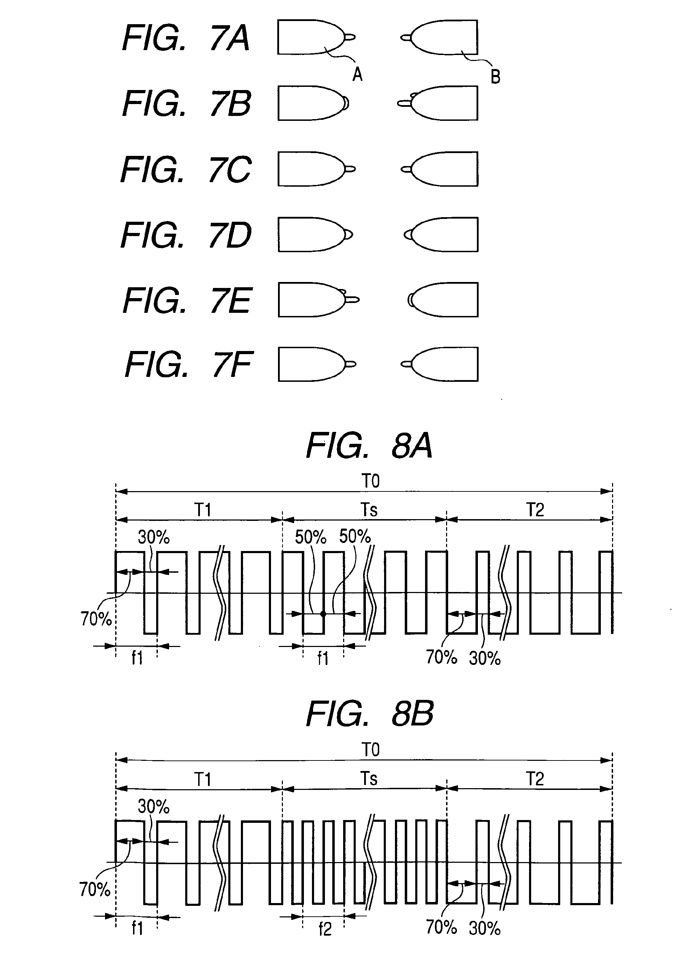

Based on this, changes in the state of lamp electrode tips will be described in detail again with reference to Fig. 7. Assume that protrusions as in a state (a) have grown first. When a positive-current duty is increased, the electrodes enter a state (b). Then, at the time of a symmetrical square wave current, that is, at the time when the positive and negative duties are symmetrical, a protrusion at the electrode on a side A having a high temperature at the time of an asymmetrical waveform decreases in temperature and thereby temporarily grow, while a protrusion at the electrode on a side B having a low temperature increases in temperature and thereby temporarily melts (Fig. 7(c)). However, if the lamp is driven with a symmetrical waveform not satisfying the temperature condition for a stable halogen cycle, the balance of the halogen cycle is destroyed, both protrusions melt, and thereby the electrodes enter a state (d). Then, when a negative-current duty is increased, the electrodes enter a state (e). When the positive-current duty is increased again, the electrodes enter a state (f) (return to the state (a)). Naturally, Fig. 7 shows the principle of this invention in an exaggerated manner. In practice, visually identifiable growing/melting of protrusions does not always occur.

It is to be noted that, in the above-described invention I, the basic concept has been described under the assumption that melting and growing of protrusions progress at the same speed. In practice, however, it is difficult to make melting and growing progress at the same speed, and hence the speeds of melting and growing are slightly different. As a result, while the lamp voltage can be kept within a certain range over a short term, the influence of the difference in speed accumulates gradually and the lamp voltage cannot be kept within a predetermined range over a long term.

According to an experiment by the inventors, it was confirmed that, when a frequency or the number of cycles of the symmetrical square wave current part was increased, the balance of the halogen cycle was destroyed and progress of melting slightly exceeded progress of growing. Here, from a long-term perspective, the distance between the electrodes increases and thereby the lamp voltage increases when the progress of melting of protrusions exceed the progress of growing thereof, while the distance between the electrodes decreases and thereby the lamp voltage decreases when the progress of growing thereof exceeds the progress of melting thereof. Moreover, it was confirmed that this tendency was affected not only by asymmetry of the lamp current waveform but also by chosen driving frequency and cycle, the degree of progress in life, and the like.

More specifically, it was demonstrated that, when driving was performed with the same frequency f1 in the periods T1, Ts and T2, the tendency that the distance between the electrodes becomes shorter (the tendency of long-term growing) was slightly greater in the periods T1 and Ts than in the period T2. In other words, when f1 is a relatively low frequency (fL), long-term growing progresses little by little in the period T2 as well as in the periods T1 and Ts while the contribution is slightly greater in the periods T1 and Ts than in the period T2. Moreover, when f1 is a relatively high frequency (fH), long-term melting progresses little by little in the period T2 as well as in the periods T1 and Ts while the contribution is slightly greater in the period T2 than in the periods T1 and Ts. Additionally, when f1 is an intermediate frequency (fM), long-term growing slightly progresses in the periods T1 and Ts, while long-term melting slightly progresses in the period T2.

In consideration of the above-described tendency, Invention II controls the frequency or the number of cycles of a positive/negative symmetrical waveform of a lamp current waveform by detecting a lamp parameter (lamp voltage, driving time or the like), and thereby keeps the distance between electrodes appropriate over a long term regardless of chosen driving frequency or life.

Broadly, Invention II (A) controls the frequency in the period Ts, or (B) controls the ratio of the number of cycles in the period Ts to the total number of cycles in the period T0, according to the detected lamp parameter.
Here, "or" means the case of performing only (A), the case of performing only (B) and the case of performing both (A) and (B) at the same time.
Modes of (B) include: (B1) to change the length of the period Ts (and at the same time change the lengths of the periods T1 and T2) while fixing the length of the period T0; (B2) to change the length of the period Ts while changing the length of the period T0 and fixing the lengths of the periods T1 and T2; and (B3) to change the lengths of the periods T1 and T2 while changing the length of the period T0 and fixing the length of the period Ts.

More specifically, the following four modes are included.
(1) In the case of f1=fL, when the lamp parameter shows a decrease in the distance between the electrodes by a predetermined amount or more, (A) the frequency in Ts is increased to f2, which is relatively high, and thereby the melting tendency of the electrodes is increased in Ts to restore the distance between the electrodes.
(2) In the case of f1=fH, when the lamp parameter shows an increase in the distance between the electrodes by a predetermined amount or more, (A) the frequency in Ts is reduced to f0, which is relatively low, and thereby the growing tendency of the electrodes is increased in Ts to restore the distance between the electrodes.
(3) In the case of f1=fM, when the lamp parameter shows a decrease in the distance between the electrodes by a predetermined amount or more, (A) the frequency in Ts is increased to f2, which is relatively high, and thereby the melting tendency of the electrodes is increased in Ts, or (B) the ratio of the number of cycles in the period Ts to the total number of cycles in T0 is increased and thereby the melting tendency of the electrodes is increased as a total in T0, to restore the distance between the electrodes.
(4) In the case of f1=fM, when the lamp parameter shows an increase in the distance between the electrodes by a predetermined amount or more, (A) the frequency in Ts is reduced to f0, which is relatively low, and thereby the growing tendency of the electrodes is increased in Ts, or (B) the ratio of the number of cycles in the period Ts to the total number of cycles in T0 is reduced and thereby the growing tendency of the electrodes is increased as a total in T0, to restore the distance between the electrodes.

In the example to be presented below, description will be given by especially assuming the above-described cases (1) and (3). This is based on the following reasons. The cases (1) and (3) are situations in which a driving frequency is assumed to be approximately 50 to 400 Hz used in general, while the case (2) is a situation unlikely to occur as long as a frequency fH which is higher than a generally-used frequency is used on purpose. In addition, an increase in the distance between the electrodes as in the cases (2) and (4) is not a big problem (the distance between the electrodes can be restored by reducing the lamp current or the like). It is needless to say that the same idea as in the following example is also applicable to the cases (2) and (4).
Incidentally, "the number of periods" and "the number of cycles" are synonymous in the following description.

### Example.

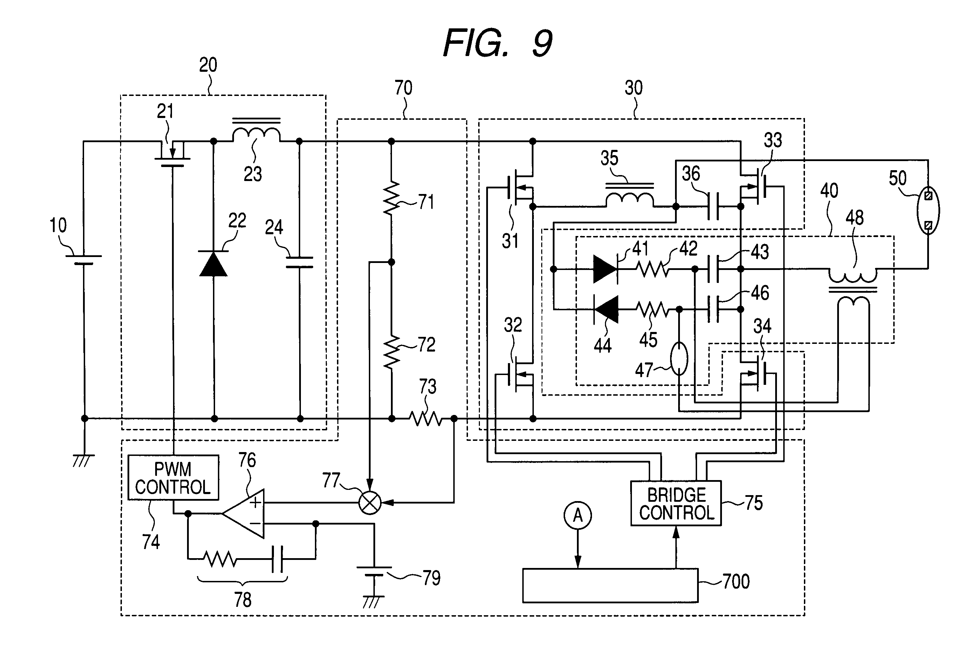

Fig. 9 is a circuit diagram showing a first example of Invention II. Fig. 9 is different from Fig. 28 in that a mode control circuit 700 is added to a bridge control circuit 75. In the mode control circuit 700, a point A is connected to a lamp voltage detection circuit (resistances 71 and 72), and a lamp voltage is inputted. The mode control circuit 700 determines a duty ratio, which is an output parameter, on the basis of a detected lamp voltage, inputs the determined duty ratio to the bridge control circuit 75, and thereby a switching operation on a bridge circuit 30 is performed according to the duty ratio.

Here, the mode control circuit can choose one from two driving modes depending on the lamp voltage. One of the driving modes is a normal mode in which, for example, as shown in Fig. 8(a): in the period T1, the positive/negative current duties of 70%:30% are repeated for 10 cycles at f1 of 100 Hz (in the period T2, 30%:70% are repeated for 10 cycles at f3 of 100 Hz); and in the period Ts, 50%:50% are repeated for 10 cycles at f2 of 100 Hz. The other driving mode is a VL decrease countermeasure mode in which 50%:50% are repeated for 20 cycles at f2 of 200 Hz in the period Ts as shown in Fig. 8(b), for example. As described above, the frequency of the symmetrical square wave current is higher and the number of periods is larger in the VL decrease countermeasure mode than the normal driving mode. Accordingly, the growing tendency of protrusions is slightly greater than the melting tendency thereof in the normal driving mode, while the melting tendency thereof is slightly greater than the growing tendency thereof in the VL decrease countermeasure mode.

In choosing a driving mode, the following control is performed. Firstly (under the assumption that the lamp voltage at the beginning is V1 or higher), driving is performed by the normal mode. When the lamp voltage has reached a lower-limit value V1, driving is performed by the VL decrease countermeasure mode to increase the lamp voltage. When the lamp voltage has reached an upper-limit value V2 (V1<V2), driving is performed by the normal mode to reduce the lamp voltage.
It is to be noted that, although the period T0 is configured of one period T1, one period Ts and one period T2 in this order in the above-described example, the order of the periods, the number of times of each period and the like in the period T0 can appropriately be chosen.

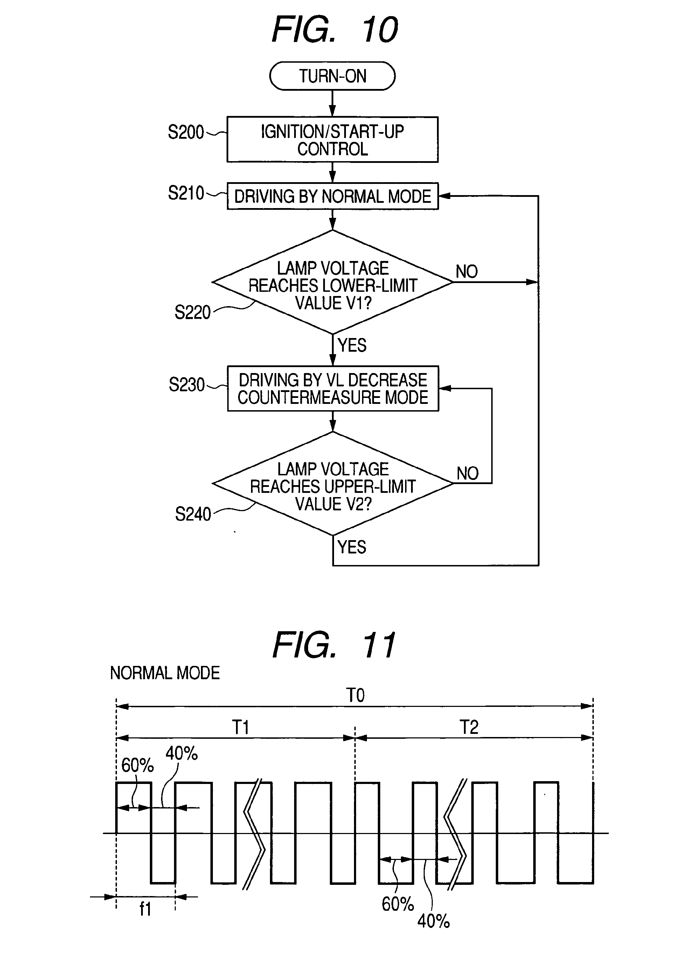

Fig. 10 is a flowchart explaining the above-described control.
In Fig. 10, when a high pressure discharge lamp ballast is turned on, ignition/start-up control is performed in Step S200, and then stable driving of a lamp 50 is started. The ignition/start-up control performed for several minutes from turning-on of the ballast to the stable driving may employ general control. Since such control is not the essence of this invention, description thereof is omitted.

In Step S210, driving by the normal mode, which is default setting, is performed. The frequency and the number of periods in the normal mode may be optimally set depending on the lamp.
The mode control circuit 700 causes the bridge control circuit 75 to provide output at the optimally set frequency and number of periods, until the lamp voltage reaches the lower-limit value V1. Here, as an example, the values of the frequency and the number of cycles are set at 100 Hz and 10 cycles, respectively. The lower-limit value V1 may be any as long as being approximately 55 V to 65 V.

When the lamp voltage reaches the lower-limit value V1 in Step S220, the step proceeds to Step S230.
The mode control circuit 700 switches the driving mode to the VL decrease countermeasure mode, and causes the bridge control circuit 75 to provide output at the frequency and the number of periods for melting of protrusions, until the lamp voltage reaches the upper-limit value V2. Here, as an example, the values of the frequency and the number of periods are set at 200 Hz and 20 cycles, respectively. By changing the frequency and the number of cycles of the constant-pace square wave current from 100 Hz and 10 cycles to 200 Hz and 20 cycles, respectively, the lamp voltage increases. The upper-limit value V2 may be any as long as being approximately 65 V to 75 V.

When the lamp voltage reaches the upper-limit value V2 in Step S240, the step returns to Step S210, and the mode control circuit 700 switches the driving mode from the melting mode to the growing mode. Thereafter, Steps S210 to S240 are repeated during driving.

By actively controlling the lamp voltage in the symmetrical square wave current part as described above, the lamp voltage can be kept substantially the same over a long term, and the lamp power can reliably be secured. Moreover, since the modes are switched only by changing the frequency or the number of periods, the mode switching is not visually identified by a user. In addition, since the above-described control has such a configuration as to hardly affect the driving frequency (that is, likely to absorb such an influence), the degree of freedom in setting the driving frequency increases. Hence, it is easy to apply this control to even a case in which a restriction is imposed on the driving frequency by other conditions.

In this invention, even when the lamp voltage has a decreasing tendency (that is, the distance between the electrodes is in a decreasing tendency), the speed at which the voltage decreases (i.e., the speed at which the distance between the electrodes decreases) is significantly slower than the speed at which the voltage decreases (i.e., the speed at which the distance between the electrodes decreases) in the conventional example in which both electrodes concurrently grow. Specifically, the speed at which the distance between the electrodes decreases is 2xG in the conventional example and is (G-M) in this invention, where G denotes the speed at which protrusions grow and M denotes the speed at which protrusions melt. Thus, since (G-M) << 2G, controlling of changes of the state of the distance between the electrodes is significantly easier in this invention than in the conventional example.
With this configuration, by increasing a sampling period for detecting the lamp voltage, detection accuracy can be increased. In addition, since changes of the state of protrusions highly follow the control by the ballast, an overshoot state does not occur in reducing the distance between the electrodes. As a result, an adverse effect of excessive growing of protrusions can be appropriately and reliably prevented.

Design Example.
From the result of the experiment, it was demonstrated that growing and melting of protrusions could be controlled in a preferable manner by designing the high pressure discharge lamp ballast as follows. Here, the rated power of the used lamp is 200 W.
The frequency and the number of cycles in the symmetrical square wave current part (Ts) in the normal mode are set at 100 Hz and 5 cycles, respectively, while the frequency and the number of cycles in the symmetrical square wave current part (Ts) in the VL decrease countermeasure mode are set at 200 Hz and 20 cycles, respectively. Additionally, the lower-limit value V1 in the normal mode and the upper-limit value V2 in the VL decrease countermeasure mode are set at 62 V and 68 V, respectively.
It is to be noted that the above presents a representative preferable design example for clarifying the outline of the design, and hence this invention is not limited to the above-described numerical values. Appropriate numerical values may be set depending on the lamp to be used.

Moreover, the example of detecting the lamp voltage as a lamp parameter has been described. However, a driving time may be employed as the lamp parameter to switch between the normal mode and the VL decrease countermeasure mode at an appropriate interval. Incidentally, the detection circuit in this case is a timer (not illustrated). This example is a technique effective in such a lamp that changes in growing and melting states of protrusions can be estimated to some extent (for example, a lamp for which such estimation is proved by an experiment). Additionally, since detection of lamp output is not required, this example has an advantage of having no possibility of malfunction.

Moreover, the lamp parameter may be a lamp power or a lamp current. Specifically, driving may be changed from the normal mode to the VL decrease countermeasure mode by detecting that the lamp power has decreased to a predetermined value or lower at the time of constant lamp current control, or by detecting that the lamp current has increased to a predetermined value or higher at the time of constant lamp current control. Naturally, the lamp voltage is indirectly detected in these cases.

### «Invention III. Lamp Current Waveform Control Based on Lamp Parameter»

As also described in Invention II, the basic concept of this invention has been described under the assumption that melting and growing of protrusions progress at the same speed in Invention I. In practice, however, it is difficult to make melting and growing progress at exactly the same speed, and hence the speeds of melting and growing are slightly different. As a result, while the lamp voltage can be kept within a certain range over a short term, the influence of the difference in speed accumulates gradually and the lamp voltage cannot be kept within a predetermined range over a long term.

As also described in Invention II, from an experiment by the inventors, it was confirmed that the progress of melting slightly exceeded the progress of growing when the positive-negative asymmetry of the lamp current waveform was increased (for example, when a positive-negative duty difference was increased), while the progress of growing slightly exceeded the progress of melting when the asymmetry was decreased (for example, when a positive-negative duty difference was decreased). Here, from a long-term perspective, the distance between the electrodes increases and thereby the lamp voltage increases when the progress of melting of protrusions exceeds the progress of growing thereof, while the distance between the electrodes decreases and thereby the lamp voltage decreases if the progress of growing thereof exceeds the progress of melting thereof. It was also confirmed that this tendency is affected not only by the asymmetry of the lamp current waveform but also the chosen driving frequency and the degree of progress in life.

In consideration of the above-described tendency, Invention III controls the asymmetry of the lamp current waveform by detecting a lamp parameter (lamp voltage, driving time or the like), and thereby keeps the distance between electrodes appropriate over a long term regardless of chosen driving frequency or life.
Specifically, at least one of ΔIt1 and ΔIt2 is controlled according to a detected lamp parameter, where ΔIt1 denotes the difference in current-time product between positive and negative currents in a period T1 and ΔIt2 denotes the difference in current-time product between positive and negative currents in a period T2.

### Example.

A circuit diagram showing an example of Invention III is the same as Fig. 9 described above. Accordingly, the circuit diagram is different from Fig. 28 in that a mode control circuit 700 is added to a bridge control circuit 75. In the mode control circuit 700, a point A is connected to a lamp voltage detection circuit (resistances 71 and 72), and a lamp voltage is inputted. The mode control circuit 700 determines a duty ratio, which is an output parameter, on the basis of a detected lamp voltage, inputs the determined duty ratio to the bridge control circuit 75, and thereby a switching operation on a bridge circuit 30 is performed according to the duty ratio.

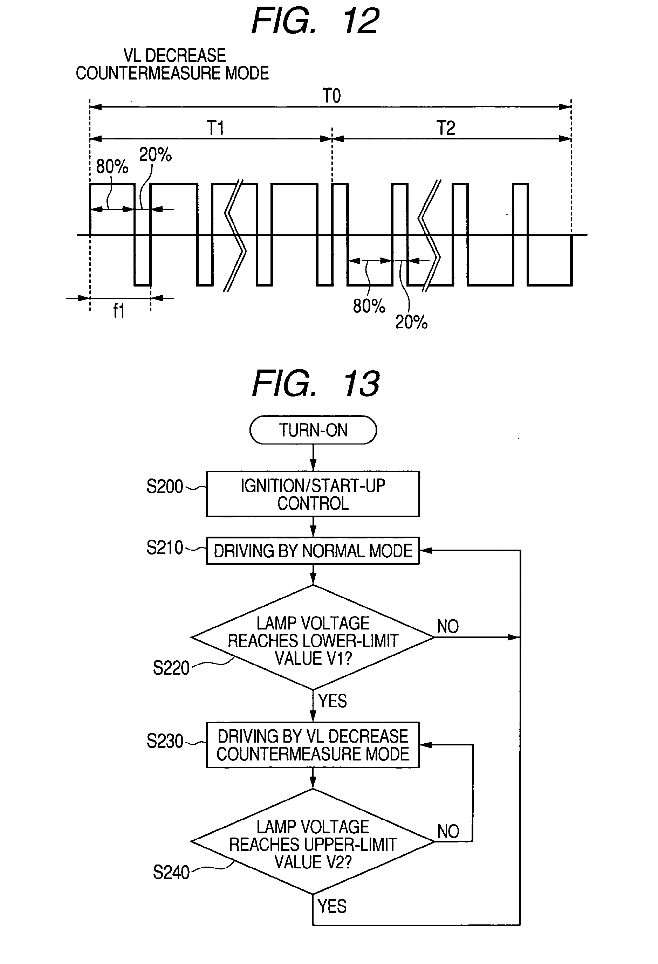

Here, the mode control circuit can choose one from two driving modes depending on the lamp voltage. One of the driving modes is a normal mode in which the positive/negative current duties are set to be 60%:40% in the period T1 (40%:60% in the period T2) as shown in Fig. 11, for example. The other driving mode is a VL decrease countermeasure mode in which the positive/negative current duties are set to be 80%:20% in the period T1 (20%:80% in the period T2) as shown in Fig. 12, for example. As described above, the asymmetry in the VL decrease countermeasure mode is larger than that in the normal driving mode. Accordingly, the growing tendency of protrusions is slightly greater than the melting tendency thereof in the normal driving mode, while the melting tendency thereof is slightly greater than the growing tendency thereof in the VL decrease countermeasure mode.

In choosing a driving mode, the following control is performed. Firstly (under the assumption that the lamp voltage at the beginning is V1 or higher), driving is performed by the normal mode. When the lamp voltage has reached a lower-limit value V1, driving is performed by the VL decrease countermeasure mode to increase the lamp voltage. When the lamp voltage has reached an upper-limit value V2 (V1<V2), driving is performed by the normal mode to reduce the lamp voltage.

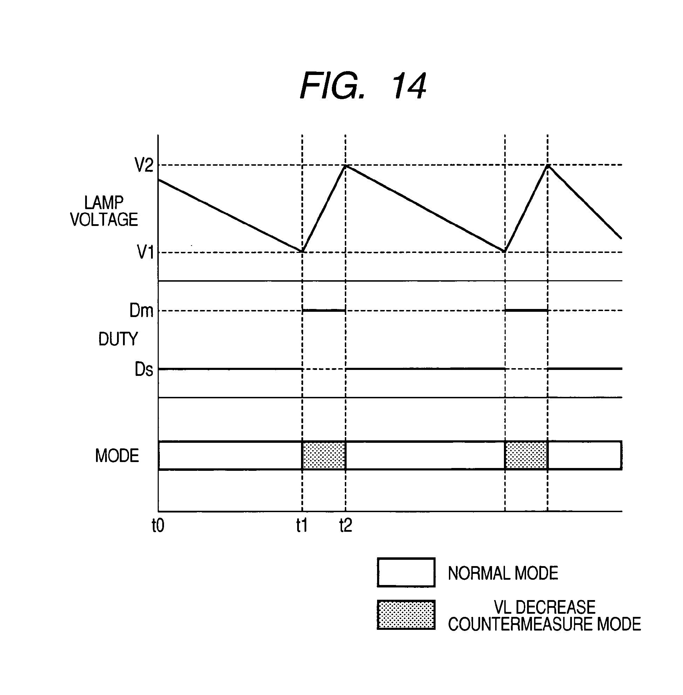

Fig. 13 is a flowchart explaining the above-described control. Fig. 14 is a timing chart corresponding to the flowchart in Fig. 13.
In Fig. 13, when a high pressure discharge lamp ballast is turned on, ignition/start-up control is performed in Step S200, and then stable driving of a lamp 50 is started (corresponding to to in Fig. 14). The ignition/start-up control performed for several minutes from turning-on of the ballast to the stable driving may employ general control. Since such control is not the essence of this invention, description thereof is omitted.

In Step S210, driving by the normal mode, which is default setting, is performed. The duty ratio in the normal mode may be optimally set depending on the lamp.
The mode control circuit 700 causes the bridge control circuit 75 to provide output at the optimally set duty ratio Ds, until the lamp voltage reaches the lower-limit value V1. Here, as an example, the values of the duty ratio are set to be 60%:40%. The lower-limit value V1 may be any as long as being approximately 55 V to 60 V.

When the lamp voltage reaches the lower-limit value V1 in Step S220, the step proceeds to Step S230.
The mode control circuit 700 switches the driving mode to the VL decrease countermeasure mode, and causes the bridge control circuit 75 to provide output at the duty Dm for melting of protrusions, until the lamp voltage reaches the upper-limit value V2 (corresponding to t₁ in Fig. 14). Here, as an example, the values of the duty ratio are set to be 80%:20%. By changing the duty ratio from 60%:40% (Ds) to 80%:20% (Dm), which is a square-wave modulated current having a more biased positive/negative current duty ratio, the lamp voltage increases. The upper-limit value V2 may be any as long as being approximately 65 V to 75 V.

When the lamp voltage reaches the upper-limit value V2 in Step S240, the step returns to Step S210, and the mode control circuit 700 switches the driving mode from the melting mode to the growing mode (corresponding to t₂ in Fig. 14). Thereafter, Steps S210 to S240 are repeated during driving.

By actively controlling the lamp voltage in the square-wave modulated current as described above, the lamp voltage can be kept substantially the same over a long term, and the lamp power can reliably be secured. Moreover, since the modes are switched only by changing the duties, the mode switching is not visually identified by a user. In addition, the above-described control has such a configuration as to hardly affect the driving frequency (that is, likely to absorb such an influence), the degree of freedom in setting the driving frequency increases. Hence, it is easy to apply this control to even a case in which a restriction is imposed on the driving frequency by other conditions.

In this invention, even when the lamp voltage has a decreasing tendency (that is, the distance between the electrodes is in a decreasing tendency), the speed at which the voltage decreases (i.e., the speed at which the distance between the electrodes decreases) is significantly slower than the speed at which the voltage decreases (i.e., the speed at which the distance between the electrodes decreases) in the conventional example in which both electrodes concurrently grow. Specifically, the speed at which the distance between the electrodes decreases is (G-M) in this invention and is 2xG in the conventional example, where G denotes the speed at which protrusions grow and M denotes the speed at which protrusions melt. Thus, since (G-M) << 2G, controlling of changes of the state of the distance between the electrodes is significantly easier in this invention than in the conventional example.
With this configuration, by increasing a sampling period for detecting the lamp voltage, detection accuracy can be increased. In addition, since changes of the state of protrusions highly follow the control by the ballast, an overshoot state does not occur in reducing the distance between the electrodes. As a result, an adverse effect of excessive growing of protrusions can be appropriately and reliably prevented.

### Design Example.

From the result of the experiment, it was demonstrated that growing and melting of protrusions could be controlled in a preferable manner by designing the high pressure discharge lamp ballast as follows. Here, the rated power of the used lamp is 200 W.
The duty ratio Ds in the normal mode are set to be 60%:40%, while the duty ratio Dm in the VL decrease countermeasure mode are set to be 80%:20%. Additionally, the lower-limit value V1 in the normal mode and the upper-limit value V2 in the VL decrease countermeasure mode are set at 57 V and 70 V, respectively.
It is to be noted that the above presents a representative preferable design example for clarifying the outline of the design, and hence this invention is not limited to the above-described numerical values. Appropriate numerical values may be set depending on the lamp to be used.

### Alternative Example.

The above-described example has the configuration of controlling ΔIt1 and ΔIt2 in the respective periods T1 and T2. However, such a configuration may be employed that only ΔIt1 would be controlled in the period T1, or that only ΔIt2 would be controlled in the period T2. It is to be noted that this invention can also be applied to a case in which the entire current waveform in the period T1 and the entire current waveform in the period T2 are both positive/negative asymmetrical (for example, the positive-negative duty ratio is 55:45 in the period T1 and 35:65 in the period T2, or the like, in the normal mode) depending on the structure of both electrodes, the structure of a bulb and the structure of a lighting device, or the asymmetry in arrangement thereof, especially depending on the difference in temperature between both electrodes.

Moreover, the square-wave modulated current in each of the modes may be a compound current formed by appropriately combining the waveforms in Figs. 1, 3, 4 and 5.
Incidentally, in Fig. 3, the same control as in the above-described example may be performed in the periods T1 and T2. Alternatively, the ratio of the period Ts (which is a period having each duty of 50%) to the entire period may be controlled without changing the duty ratios in the periods T1 and T2. Specifically, a period T3 in the VL decrease countermeasure mode may be set lower in ratio than the period T3 in the normal mode, and the asymmetry in the VL decrease countermeasure mode may be set higher than the asymmetry in the normal mode.

In Fig. 4, the maximum duty in the VL decrease countermeasure mode may be set larger than that in the normal mode, for example.
Moreover, in Fig. 5, the lamp current upper-limit value in the VL decrease countermeasure mode may be set larger than that in the normal mode (in other words, the lamp current lower-limit value in the VL decrease countermeasure mode may be set smaller than that in the normal mode). Here, it is necessary to secure, for the lamp current lower-limit value in the VL decrease countermeasure mode, such a current value as not to affect maintaining of discharge.

Furthermore, the example of detecting the lamp voltage as a lamp parameter has been described. However, a driving time may be employed as the lamp parameter to switch between the normal mode and the VL decrease countermeasure mode at an appropriate interval. Incidentally, the detection circuit in this case is a timer (not illustrated). This example is a technique effective in such a lamp that changes in growing and melting states of protrusions can be estimated to some extent (for example, a lamp for which such estimation is proved by an experiment). Additionally, since detection of lamp output is not required, this example has an advantage of having no possibility of malfunction.

The above-described example has been presented as the most preferable example of this invention. Related to this respect, the following notes are provided.
(1) A step-down chopper circuit 20 presented as a DC output unit may be a different known circuit type (for example, flyback type or the like). Similarly, a full-bridge circuit 30 presented as an AC conversion unit may also be a different known circuit type (for example, a push-pull type or the like).
(2) The square-wave modulated current in the above-described example may be a compound current formed by appropriately combining the waveforms in Figs. 1, 3, 4 and 5. Specifically, the square-wave modulated current may be any as long as the asymmetry (bias) of the modulated waveform can be controlled so that the effective value of the positive current and the current-time product of the negative current would be biased periodically.
(3) The asymmetry (bias) of the above-described square-wave modulated current is controlled by the difference in current-time product, but may be controlled by the difference in current squared time.

### <<Invention IV. Control at Start-up Time>>

Designs of Inventions I to III are sufficient if stable driving time is only taken into consideration. However, as also mentioned as an object, it is desirable to separately provide control for a start-up period. From an experiment by the inventors, it is known that protrusions at both electrodes melt if any one of the above-described current waveforms for stable driving is also applied in the start-up period.
Even if protrusions melt in the start-up period, the protrusions may grow again during stable driving by performing driving in a long time. However, some users may repeat ON/OFF in a short time. In such a case, it is assumed that the ratio of start-up periods to the entire driving time increases, the protrusions wear, and thereby the life of the lamp becomes shorter. As countermeasures against this, the following examples are to apply, during a start-up period, a lamp current waveform causing a small degree of wear of protrusions.

### Example 1.

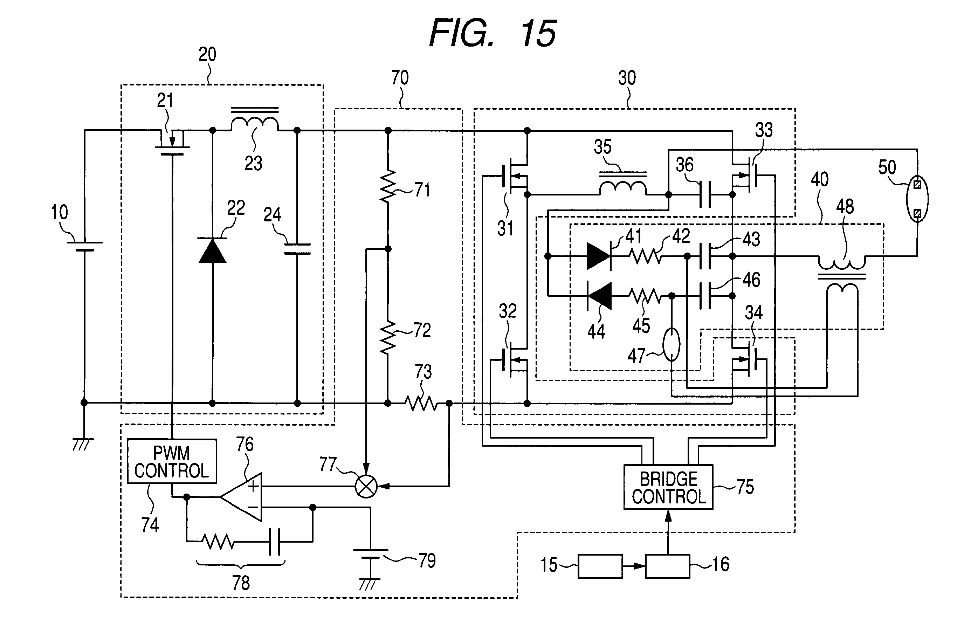

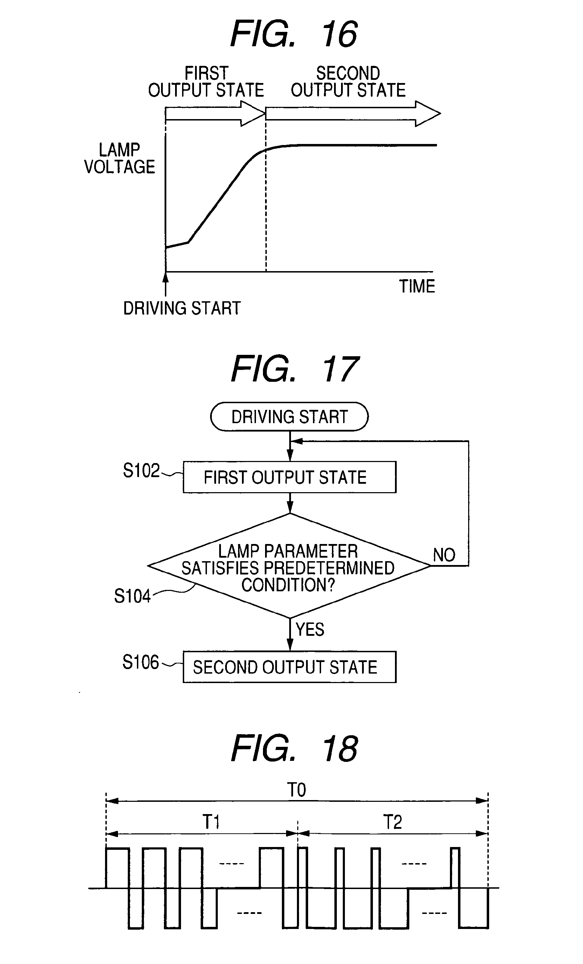

Fig. 15 is a circuit diagram showing an example of Invention IV. Fig. 15 is different from Fig. 28 in that a detection unit 15 and a switching unit 16 are further included. Although described as a separate unit for convenience of explanation, these units are those integrated into a general PWM control circuit 74 or the like.
The detection unit 15 is a unit for detecting a lamp parameter for driving the lamp. The lamp parameter includes at least one of elapsed time from the time of lamp driving start, a lamp voltage value, a derivative of a lamp voltage with respect to time, a lamp power and the like. Here, a known method may be employed for a concrete method of detecting each of these, as will be described below.
The switching unit 16 is a unit for switching, in accordance with an input from the detection unit 15, the operation state of a bridge control circuit 75, that is, the output state from a high pressure discharge lamp ballast to a lamp 50, from a first output state to a second output state. Specifically, as an outline, the switching unit 16 maintains the first output state in a start-up period while maintaining the second output state during stable driving as shown in Fig. 16.

Here, a lamp current waveform causing a small degree of wear of protrusions needs to be applied in the start-up period. Accordingly, what is only needed is to reduce the asymmetry of positive/negative lamp currents (in other words, to reduce the degree of bias) in the first output state than in the second output state.
Specifically, for example, related to the examples 1 to 3 of Invention I, what is needed is to set the duty difference between positive and negative lamp currents smaller in the first output state than in the second output state.
Moreover, related to the example 4 of Invention I, what is needed is to set the difference in peak value between positive and negative lamp currents smaller in the first output state than in the second output state.

Furthermore, related to Invention II, what is needed is to set the ratio of the number of cycles in a period T0 to the number of cycles in a symmetrical current period Ts larger in the first output state than in the second output state.

In the first output state, the lamp current may have a positive/negative symmetrical waveform with each duty of 50% (duty difference between positive and negative currents = 0).
Alternatively, if the lamp is configured so that protrusions would not wear heavily, a lamp current which is asymmetrical while the degree of asymmetry is reduced (the degree of bias is reduced) may also be employed in the first output state. For example, a waveform in which the duties of the positive/negative lamp currents are set to be 60/40% (duty difference between positive and negative currents = 60-40 = 20) may be employed in the first output state, while a waveform in which the duties of the positive/negative lamp currents are set to be 70/30% (duty difference between positive and negative currents = 70-30 = 40) may be employed in the second output state.

From an experiment by the inventors, it was confirmed that melting of protrusion in the start-up period could be prevented by setting each of the positive and negative duties at 50% in the first output state, and setting the output frequency (driving frequency) in the first output state at any value chosen from 50 Hz to 1kHz.
Thus, not only the duty ratio but also the driving frequency may be switched between the first output state and the second output state.

A switching operation by the detection unit 15 and the switching unit 16 is as follows.
For example, when elapsed time from driving start is used as the lamp parameter, the detection unit 15 only needs to be a timer. The switching unit 16 only needs to maintain an output from a bridge circuit 30 in the first output state until the elapsed time reaches a predetermined value t1, and to switch from the first output state to the second output state when the elapsed time has reached the predetermined value t1. Here, t1 may be any as long as being approximately 10 minutes to 20 minutes, although also depending on the type of the lamp.

When a lamp voltage value is used as the lamp parameter, the detection unit 15 only needs to be a voltage divider circuit connected to an output end of a step-down chopper circuit 20 (to use resistances 71 and 72). The switching unit 16 only needs to maintain an output from the bridge circuit 30 in the first output state until the lamp voltage reaches a predetermined value V1, and to switch from the first output state to the second output state when the lamp voltage has reached the predetermined value V1.
When a derivative of a lamp voltage with respect to time is used as the lamp parameter, the detection unit 15 only needs to include a unit for detecting a derivative, in addition to the above-described voltage divider circuit. The switching unit 16 only needs to maintain an output from the bridge circuit 30 in the first output state until the lamp voltage derivative decreases to a predetermined value dV1/dt, and to switch from the first output state to the second output state when the lamp voltage derivative has decreased to the predetermined value dV1/dt.
Alternatively, detections using elapsed time, a lamp voltage value and a lamp voltage derivative may be combined to obtain the logical addition or the logical multiplication of the detection results.

In addition, switching from constant current control for the start-up period (low lamp voltage period) to constant power control for stable driving and switching from the first output state to the second output state may be performed at the same time. This can simplify the structure of a control system in a PWM control circuit 74 and the like.
Here, if the control according to Example 4 is used in the second output state, the switching unit 16 should be connected to the PWM control circuit 74, or to the bridge control circuit 75 and the PWM control circuit 74. This invention is not to limit such combinations of various controls and connections of units/circuits.

With the above-described configuration, lamp driving can be performed while protrusions at the electrodes are controlled to be in an appropriate state, in the entire period in which the lamp is in use from driving start to driving end. Thereby, flickers can be prevented and the lamp voltage can be maintained appropriately.

Fig. 6A is a flowchart showing a driving method corresponding to Example 1 according to this invention. The flowchart shows operations performed when the driving state has reached a stable driving state after the ignition operation is performed to start the lamp discharge.
In Step S100, an initial operation of stable driving is performed. The electrode tips are assumed to be in the state (d) in Fig. 2 at the completion of this step.
In Step S110, such an asymmetrical current is supplied that a protrusion at an electrode A would melt while a protrusion at an electrode B would grow (period T1). Specifically, the current waveform is formed so that positive current > negative current.
In Step S120, such an asymmetrical current is supplied that the protrusion at the electrode A would grow while the protrusion at the electrode B would melt (period T2). Specifically, the current waveform is formed so that positive current < negative current.
It is to be noted that each of the asymmetrical currents here corresponds to any one of the current waveforms in Fig. 1, Fig. 3 and Fig. 5. As to the current waveform in Fig. 4, the period in which the positive current is larger than the negative current corresponds to Step S110 while the period in which the positive current is smaller than the negative current corresponds to Step S120.

Then, Steps S110 and S120 are repeated in the cycle T0. Here, the total of the integral value of the positive current and the total of the integral value of the negative current in one loop are set to be equal.

Alternatively, as shown in Fig. 6B, Steps S115 and S125 of supplying a symmetrical square wave current (i.e. positive current = negative current) may be inserted respectively after Steps S110 and S120 so as to correspond to the current waveform in Fig. 3 (period T3). Then, Steps S110 and S120 are repeated in the cycle T0. In this case as well, the total of the integral value of the positive current and the total of the integral value of the negative current in one loop are set to be equal.

The above-described method enables protrusions of the pair of electrodes to alternately grow/melt in parallel. Accordingly, it is possible to solve the problem of lack of illuminance or the like due to excessive growing of protrusions while preventing flickers.

Fig. 17 is a flowchart showing a driving method corresponding to Example 5. In other words, this flowchart is a part which can be included in Step S100 of Fig. 6A or Fig. 16B.
When driving is started, the first output state for the start-up period is maintained in Step S102. For example, a lamp current having a positive/negative symmetrical waveform with positive/negative duties 50%/50% and a frequency of 50 Hz to 1 kHz is applied.
In Step S104, detection and judgment on any of the above-described lamp parameters is performed. If Yes in Step S104, that is, if the lamp parameter satisfies the predetermined condition, the step proceeds to Step S106. If No, the step returns to Step S102 and the first output state is maintained.
In Step S106, the first output state is switched to the second output state. In the second output state, a current waveform shown in any one of Examples 1 to 4 may be applied to the lamp.

With the above described-configuration in which the appropriate driving method is applied to each of the start-up period and stable driving, it is possible to solve the problem of lack of illuminance or the like due to excessive growing of protrusions while preventing flickers during an entire usage period from driving start to driving end of the lamp.

The above-described examples have been presented as the most preferable examples of this invention. Related to this respect, the following notes are provided.
(1) The step-down chopper circuit 20 presented as a DC output unit may be a different known circuit type (for example, flyback type or the like). Similarly, the full-bridge circuit 30 presented as an AC conversion unit may also be a different known circuit type (for example, a push-pull type or the like).
(2) Each of the asymmetrical square wave currents in the above-described examples may be a compound current formed by appropriately combining the waveforms in Figs. 1, 3, 4 and 5.

### <<Invention V. Control in Case of Using Reflector >>

In Inventions I to IV, the operations and effects have been described under the assumption that the temperatures of both electrodes become the same when driving is performed with a normal square wave (that is, when the same electronic effect is applied to both electrodes).
As Invention V, described will be the following case. In this case, a lamp is attached to a reflector in practice, or a subreflector is further attached to the lamp. Accordingly, even though the same electronic effect is applied to electrodes A and B, a difference in temperature between the electrodes A and B occurs. In the following description, the electrode A is attached to a neck side of the reflector while the electrode B is attached to an opening side, and no subreflector is included (a case of including a subreflector will be described in paragraph 0131).
Here, if a positive/negative symmetrical waveform is applied (the same electronic effect is applied) to the electrodes A and B, the average temperature of the electrode A becomes higher than that of the electrode B. Similarly, when the total amounts (the total current-time products) of the positive currents and the negative currents in a cycle T0 become equal as in Invention I, the average temperature of the electrode A becomes higher than that of the electrode B. Accordingly, a protrusion at the electrode A melts easier than a protrusion at the electrode B. As a result, the electrode A wears heavier than the electrode B.

In view of these, in the following examples, a configuration is made so that the total of the current-time products of the positive currents would be smaller than that of the current-time products of the negative currents in the cycle T0 while adopting the basic principle of Invention I described above. Thereby, melting of the protrusion at the electrode A is alleviated, wear of the electrode main body is suppressed, and the life of the lamp is extended.
A circuit configuration of the examples of Invention V is the same as that in Invention I, but is different in relative relationship between periods T1 and T2.

### Example 1.

Fig. 18 is a view of a current waveform showing a first example of Invention V. In the following description, the duty ratio of the positive current / negative current in a period T1 is denoted by D1⁺/D1⁻, and the duty ratio of the positive current / negative current in a period T2 is denoted by D2⁺/D2⁻.
In this example, as in the reference example in Fig. 1A, a modulation cycle T0 includes the periods T1 and T2, and the driving frequency is set to be the same at f1 throughout the periods T1 and T2 while the duty ratio in one cycle is different between the period T1 and the period T2. Specifically, D1⁺>D1⁻ in the period T1, and D2⁺<D2⁻ in the period T2. Here, the duty ratio is controlled by a bridge control circuit 75, and the driving frequency f1 is 50 Hz to 1 kHz, and preferably 50 Hz to 400 Hz.

This example is different from Fig. 1A of Invention I in the following respect.
The duty difference between the positive and negative currents is different between the period T1 and the period T2. The duty difference in the period T1 (D1⁺-D1⁻) is smaller than the duty difference in the period T2 (D2⁻-D2⁺). For example, the duties D1⁺ and D1⁻ may be set respectively at 60% and 40% (duty difference 20%) in the period T1, and the duties D2⁺ and D2⁻ may be set respectively at 20% and 80% (duty difference 60%) in the period T2.
As a result, the average duty of the positive current is smaller than that of the negative current in the period T0. Consequently, the total of the current-time products of the positive current is smaller than that of the negative current.
As described above, according to this example, melting of a protrusion on the neck-side electrode A and wear of the electrode main body are prevented, and thereby the life of the lamp is improved.

### Example 2.

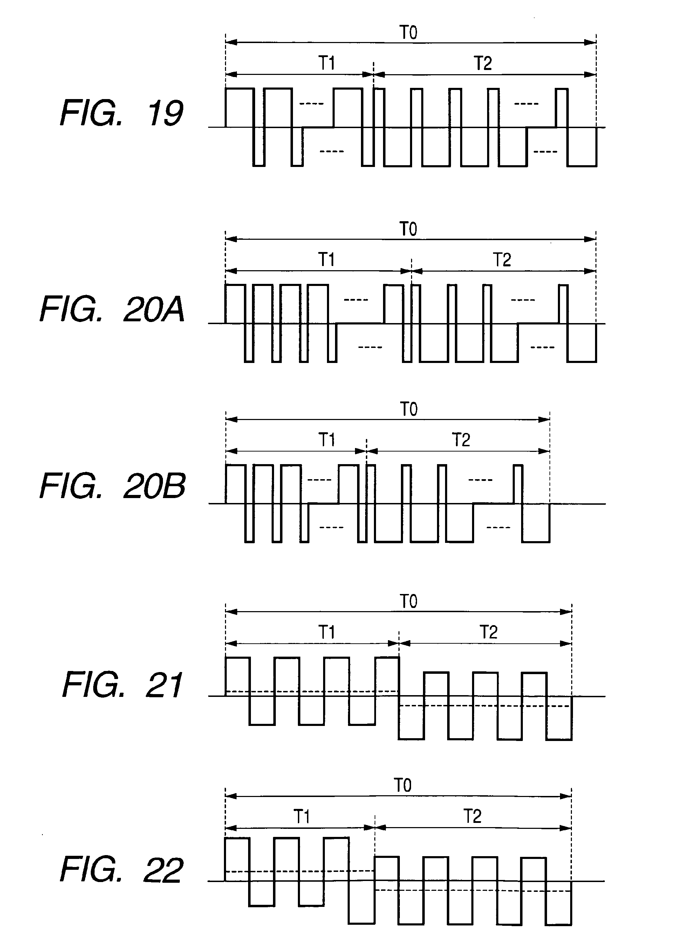

Fig. 19 is a view of a current waveform showing a second example of Invention V.
In this example, as in Example 1, a modulation cycle T0 includes periods T1 and T2, the driving frequency is set to be the same at f1 throughout the periods T1 and T2, and D1⁺>D1⁻ in the period T1 while D2⁺<D2⁻ in the period T2. Here, the duty ratio is controlled by a bridge control circuit 75, and the driving frequency f1 is 50 Hz to 1 kHz, and preferably 50 Hz to 400 Hz.

This example is different from Example 1 in duty. Specifically, the duty difference between the positive and negative currents is the same in the periods T1 and T2, that is, D1⁺=D2⁻ and D1⁻=D2⁺, while the length of the period T1 is shorter than that of the period T2.
As a result, the average duty of the positive current is smaller than that of the negative current in the period T0. Consequently, the total of the current-time products of the positive current is smaller than that of the negative current.
The obtained effects are the same as those in Example 1.

### Example 3.

Fig. 20A is a view of a current waveform showing a third example of Invention V.
In the following description, the current widths of the positive current / negative current in a period T1 are respectively denoted by d1⁺/d1⁻, and the current widths of the positive current / negative current in a period T2 are respectively denoted by d2⁺/d2⁻.
In this example, as to the current widths, d1⁺<d1⁻ while d1⁻=d2⁺, and the driving frequency is different between the period T1 and the period T2 while the lengths of the periods are the same. Here, as to the duties, D1⁺>D1⁻ while D2⁺<D2⁻ as in Examples 1 and 2.
As a result, in a period T0, the total of the current-time products of the positive current is smaller than that of the negative current.

Fig. 20B is an alternative example of the third example of Invention V.
In this example as well, as to the current widths, dl⁺<d2⁻ while dl⁻=d2⁺, and the driving frequency is different between the period T1 and the period T2 while the number of cycles included in the periods T1 and T2 are the same.
As a result, in a period T0, the total of the current-time products of the positive current is smaller than that of the negative current.
The effects obtained in Example 3 (Fig. 20A and 20B) are the same as those in Example 1.
In addition, it is necessary to set an appropriate frequency (for example, 50 Hz to 1 kHz, and more preferably 50 Hz to 400 Hz) for each of the periods T1 and T2.

### Example 4.

Fig. 21 is a view of a current waveform showing a fourth example of Invention V.
In this example, as in Fig. 5(a), a lamp current waveform is controlled to have a fixed duty ratio of 50% by a bridge control circuit 75 while the peak value of a lamp current is increased/decreased by a PWM control circuit 74. Here, although an inexpensive bridge driver IC can be used since duty control does not need to be performed by the bridge control circuit 75, the current capacity of a step-down chopper circuit 20 needs to be large.
In addition, as in the reference example, the driving frequency needs to be set relatively high (for example, 100 Hz or higher, and more preferably 200 Hz or higher) to prevent changes in optical output from being visually identified.

This example is different from Fig. 5(a) in the following respect.
The difference in peak value between the positive current and the negative current is different between a period T1 and a period T2, and the difference in peak value in the period T1 is smaller than that in the period T2. As shown by broken lines in Fig. 21, the absolute value of the average current value in the period T1 is smaller than that in the period T2.
As a result, in a period T0, the total of the current-time products of the positive current is smaller than that of the negative current.

### Example 5.

Fig. 22 is a view of a current waveform showing a fifth example of Invention V.
In this example, as in Example 4, a lamp current waveform is controlled to be a fixed duty ratio of 50% by a bridge control circuit 75 while the peak value of a lamp current is increased/decreased by a PWM control circuit 74.
This example is different from the reference example shown in Fig. 5(a) in that the length of a period T1 is shorter than that of a period T2, although the difference in peak value between the positive and negative currents is the same in the periods T1 and T2.
As a result, in a period T0, the total of the current-time products of the positive current is smaller than that of the negative current.

### Example 6.

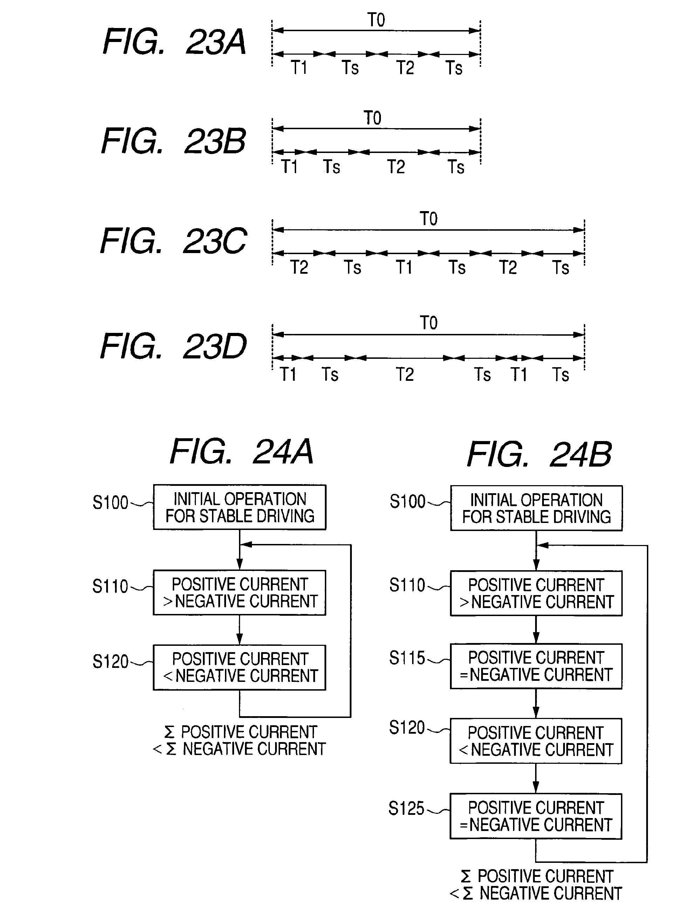

Figs. 23A to 23D are each a view of a current waveform showing a sixth example of Invention V.
In Example 6, as in Fig. 3, a period Ts of a current in which current-time products are not biased, that is, a positive/negative symmetrical current, is inserted.
Fig. 23A corresponds to Example 1 (Fig. 18), Example 3 (Fig. 20A) and Example 4 (Fig. 21). In other words, Fig. 23A shows a waveform in which the period Ts is inserted between the period T1 and the period T2 in Fig. 18, Fig. 20A or Fig. 21.
Fig. 23B corresponds to Example 2 (Fig. 19), Example 3 (Fig. 20B) and Example 5 (Fig. 22). Specifically, Fig. 23B shows a waveform in which the period Ts is inserted between the period T1 and the period T2 in Fig. 19, Fig. 20B or Fig. 22. Here, the technical meaning, a determination method and the like of the period Ts are the same as the reference example described in relation to Fig. 3.

Fig. 23C basically corresponds to Example 1 (Fig. 18), Example 3 (Fig. 20A) and Example 4 (Fig. 21). In Fig. 23C, as to the number of inserted times of each of the periods T1, T2 and Ts in one period T0, the number of inserted times of the period T1 is set smaller than that of the period T2.
Fig. 23D basically corresponds to Example 2 (Fig. 19), Example 3 (Fig. 20B) and Example 5 (Fig. 22). In Fig. 23D, as to the total length of each of the periods T1, T2 and Ts in one period T0, the total length of the period T1 is set shorter than that of the period T2.
Here, T1, T2 and Ts may be arranged regularly or randomly.

In any of the cases in Figs. 23A to 23D, the total of the current-time products of the positive current is consequently smaller than that of the negative current in the period T0.

### Example 7.

Moreover, any of the waveforms in Fig. 18 to Figs. 23 may have continuous changes in waveform in each period. For example, the waveform may have continuous changes in duty as the waveform shown in Fig. 4, to set the total of the current-time products of the positive current smaller than that of the negative current in the period T0.

According to Examples 1 to 7 described above, flickers can be effectively prevented, and also wear of the neck-side electrode can be prevented. Accordingly, extension of the life of the lamp can be achieved in addition to the effects obtained in the reference example.

Fig. 24A is a flowchart showing a driving method according to Invention V. This flowchart shows operations when the driving state has reached a stable driving state after the ignition operation performed when lamp discharge is started.
In Step S100, an initial operation of stable driving is performed. The electrode tips are assumed to be in the state (d) in Fig. 2 at the completion of this step.
In Step S110, such a square-wave modulated current is supplied that a protrusion at the electrode A would melt while a protrusion at the electrode B would grow (period T1). Specifically, the current waveform is formed so that current-time product of positive current (It⁺) > current-time product of negative current (It⁻).
In Step S120, such a square-wave modulated current is supplied that the protrusion at the electrode A would grow while the protrusion at the electrode B would melt (period T2). Specifically, the current waveform is formed so that current-time product of positive current (It⁺) < current-time product of negative current (It⁻).
It is to be noted that each of the square-wave modulated currents here corresponds to any one of the current waveforms in Fig. 18 to Fig. 22.

Then, Steps S110 and S120 are repeated in the cycle T0. Here, the total of the current-time products (ΣIt⁺) of the positive current in one loop is set to be smaller than the total of the current-time products (ΣIt⁻) of the negative current in one loop.

Alternatively, as shown in Fig. 24B, Steps S115 and S125 of supplying a symmetrical (that is, positive/negative symmetrical) square wave current may be inserted respectively after Steps S110 and S120 so as to correspond to the current waveforms in Figs. 23A to 23D (period T3). Then, Steps S110 to S120 are repeated in the cycle T0. In this case as well, the total (ΣIt⁺) of the current-time products of the positive current in one loop is set to be smaller than the total (ΣIt⁻) of the current-time products of the negative current.

According to the above, protrusions of the pair of electrodes having different temperature conditions alternately grow/melt in parallel in accordance with the temperature conditions thereof. Hence, it is possible to extend the life of the lamp while preventing flickers.

In a case where a subreflector 64 is attached to the lamp as shown in Fig. 25, application of a positive/negative symmetrical waveform results in increasing the temperature of the electrode on the subreflector side. Accordingly, when the subreflector is included, "positive current" and the symbol of "+" should be read respectively as "negative current" and the symbol of "-," and "negative current" and the symbol of "-" should be read as "positive current" and the symbol of "+" in the above-given description (in other words, Fig. 18 to Figs. 23 are to be referred to by assuming that the current from the electrode B to the electrode A is a positive current and the opposite current is a negative current as shown in Fig. 25).

In the present description, factors due to a reflector, a subreflector and a lamp cooling unit have been given as examples of factors causing the difference in temperature between electrodes. However, the present invention is also applicable to a temperature difference due to other factors such as a difference in structure between the electrodes and the orientation of the lamp.
Specifically, each of the examples is implemented by assuming that the current from an electrode on the side being high in temperature when applied with a positive/negative symmetrical current, to the other electrode is a positive current while the other current is a negative current.

The above-described examples have been presented as the most preferable examples of this invention.
Related to this respect, the following notes are provided.
(1) A step-down chopper circuit 20 presented as a DC output unit may be a different known circuit type (for example, flyback type or the like). Similarly, a full-bridge circuit 30 presented as an AC conversion unit may also be a different known circuit type (for example, a push-pull type or the like).
(2) The square-wave modulated current in each of the above-described examples may be a compound current formed by appropriately combining the waveforms in Fig. 18 to Figs. 23. Specifically, what is only needed for the square-wave modulated current is to have such a modulated waveform that the current-time product of the positive current and the current-time product of the negative current would cyclically be biased and to have the total of the current-time products of the positive current in one modulated cycle set smaller than that of the negative current.
(3) Although the waveform is controlled on the basis of the current-time products in each of the above-described examples, the same operations and effects can also be obtained even when the waveform is controlled on the basis of current squared times.

In the examples of the above-described inventions, a high pressure discharge lamp ballast for solving various conventional problems has been presented. Fig. 26 shows a projector as an application using the high pressure discharge lamp ballast. In Fig. 26, 61 denotes the high pressure discharge lamp ballast of the above-described examples, 62 denotes a reflector to which a high pressure discharge lamp 50 is attached, 63 denotes a case which includes therein the high pressure discharge lamp ballast 61, the high pressure discharge lamp 50 and the reflector 62. It is to be noted that this diagram schematically illustrates the examples, and hence dimensions, positions and the like are not as illustrated in the drawing. The projector is configured by appropriately disposing members of an unillustrated image system and the like in the case 63.
With this configuration, it is possible to obtain a highly reliable projector which can prevent a lack of illuminance and maintain reliability over a long term as well as prevent flickers.

## Claims

1. A high pressure discharge lamp ballast comprising an AC power supply unit for supplying a square wave alternating current to a high pressure discharge lamp including a bulb in which first and second electrodes are disposed so as to face each other, wherein
one modulation period T0 of the square wave alternating current supplied by the AC power supply unit includes:
a first asymmetrical current period T1 for melting a protrusion formed at a tip of the first electrode and growing a protrusion formed at a tip of the second electrode;
a symmetrical current period Ts for conducting a positive-negative symmetrical square wave; and
a second asymmetrical current period T2 for growing the first protrusion and melting the second protrusion.

2. The high pressure discharge lamp ballast according to claim 1, wherein, in a case of assuming that a current flowing from the first electrode to the second electrode is a positive current and a current flowing the other way round is a negative current,
a duty of the positive current is larger than a duty of the negative current in the first asymmetrical current period T1, the duties of the positive current and the negative current are equal to each other in the symmetrical current period Ts, and the duty of the negative current is larger than the duty of the positive current in the second asymmetrical current period T2.

3. The high pressure discharge lamp ballast according to claim 1, wherein the AC power supply unit includes:
a detection circuit for detecting a lamp parameter of the high pressure discharge lamp; and
a mode control circuit for controlling a frequency in the period Ts in accordance with the lamp parameter.

4. The high pressure discharge lamp ballast according to claim 3, wherein
the detection circuit includes a lamp voltage detection circuit for detecting a lamp voltage as the lamp parameter,
the mode control circuit is configured to apply a normal mode until the lamp voltage decreases to a predetermined value V1 or smaller, apply a voltage decrease countermeasure mode until the lamp voltage recovers to a predetermined value V2 (V1<V2) after having decreased to the predetermined value V1 or smaller, and apply the normal mode after the lamp voltage has recovered to the predetermined V2 or more, and
the frequency in the symmetrical current period Ts in the voltage decrease countermeasure mode is higher than the frequency in the symmetrical current period Ts in the normal mode.

5. The high pressure discharge lamp ballast according to claim 1, wherein the AC power supply unit includes:
a detection circuit for detecting a lamp parameter of the high pressure discharge lamp; and
a mode control circuit for controlling, in accordance with the lamp parameter, a ratio of the number of cycles included in the period Ts to the total number of cycles included in the period T0.

6. The high pressure discharge lamp ballast according to claim 5, wherein
the detection circuit includes a lamp voltage detection circuit for detecting a lamp voltage as the lamp parameter,
the mode control circuit is configured to apply a normal mode until the lamp voltage decreases to a predetermined value V1 or smaller, apply a voltage decrease countermeasure mode until the lamp voltage recovers to a predetermined value V2 (V1<V2) after having decreased to the predetermined value V1 or smaller, and apply the normal mode after the lamp voltage has increased to the predetermined V2 or more, and
the ratio of the number of cycles included in the symmetrical current period Ts to the number of cycles included in the period T0 in the voltage decrease countermeasure mode is larger than the ratio of the number of cycles included in the symmetrical current period Ts to the number of cycles included in the period T0 in the normal mode.

7. A high pressure discharge lamp ballast comprising an AC power supply unit for supplying a square wave alternating current to a high pressure discharge lamp including a bulb in which first and second electrodes are disposed so as to face each other, wherein,
in a case of assuming that a current flowing from the first electrode to the second electrode is a positive current and a current flowing the other way round is a negative current, one modulation period T0 of the square wave alternating current supplied by the AC power supply unit includes:
a first asymmetrical current period T1 in which an effective value of a half cycle of the positive current is larger than an effective value of a half cycle of the negative current; and
a second asymmetrical current period T2 in which the effective value of the half cycle of the negative current is larger than the effective value of the half cycle of the positive current.

8. A high pressure discharge lamp ballast comprising:
an AC power supply unit for supplying a square wave alternating current to a high pressure discharge lamp including a bulb in which first and second electrodes are disposed so as to face each other;
a detection unit for detecting a lamp parameter for driving of the high pressure discharge lamp; and
a switching unit for switching an output state of the AC power supply unit, wherein
the switching unit is configured to keep the output state in a first output state from driving start until the lamp parameter satisfies a predetermined condition and to switch from the first output state to a second output state after the lamp parameter has satisfied the predetermined condition,
at least the square wave alternating current in the second output state includes a first asymmetrical current period T1 for melting a protrusion formed at a tip of the first electrode and growing a protrusion formed at a tip of the second electrode, and a second asymmetrical current period T2 for growing the first protrusion and melting the second protrusion, the first and second asymmetrical current periods T1 and T2 being repeated in a predetermined cycle, and
asymmetry of a waveform of the square wave alternating current in the first output state is smaller than that of a waveform of the square wave alternating current in the second output state.

9. The high pressure discharge lamp ballast according to claim 8, wherein
the AC power supply unit includes:
a DC output unit for determining a current value of the square wave alternating current; and
an AC conversion unit for controlling polarity inversion of the square wave alternating current, and,
in a case of assuming that a current flowing from the first electrode to the second electrode is a positive current and a current flowing the other way round is a negative current,
the square wave alternating current is formed by the DC output unit and the AC conversion unit so that an integral value (X⁺) of the positive current would be larger than an integral value (X⁻) of the negative current in the first asymmetrical current period T1 while the integral value (X⁻) of the negative current would be larger than the integral value (X⁺) of the positive current in the second asymmetrical current period T2, in the second output state and
a difference between X⁺ and X⁻ in the first output state is smaller than a difference between X⁺ and X⁻ in the second output state.

10. The high pressure discharge lamp ballast according to claim 8, wherein
the AC conversion unit further includes a control unit for adjusting a duty ratio between a positive current and a negative current,
the control unit is configured so that a duty (D⁺) of the positive current would be larger than a duty (D⁻) of the negative current in the first asymmetrical current period T1 while the duty of the negative current (D⁻) would be larger than the duty (D⁺) of the positive current in the second asymmetrical current period T2, in the second output state, and
a difference between D⁺ and D⁻ in the first output state is smaller than a difference between D⁺ and D⁻ in the second output state.

11. The high pressure discharge lamp ballast according to claim 8, wherein
the AC power supply unit includes an AC conversion unit for controlling polarity inversion of the square wave alternating current,
the first and second asymmetrical current periods T1 and T2 are asymmetrical square wave currents intermittently repeated in a predetermined cycle with a symmetrical current period Ts interposed therebetween, the symmetrical current period Ts being for conducting a positive-negative symmetrical square wave, and
the AC conversion unit is configured so that a ratio of the number of cycles included in the symmetrical current period Ts to the number of cycles included in the periods T1 and T2 in the first output state would be smaller than a ratio of the number of cycles included in the symmetrical current period Ts to the number of cycles included in the periods T1 and T2 in the second output state.

12. The high pressure discharge lamp ballast according to claim 8, wherein the square wave alternating current in the first output state is a positive-negative symmetrical wave.

13. The high pressure discharge lamp ballast according to claim 8, wherein a frequency of the square wave alternating current in the first output state is 50 Hz to 1 kHz.

14. A method of driving a high pressure discharge lamp in a high pressure discharge lamp ballast including:
an AC power supply unit for supplying a square wave alternating current to a high pressure discharge lamp including a bulb in which first and second electrodes are disposed so as to face each other;
a detection unit for detecting a lamp parameter for driving of the high pressure discharge lamp; and
a switching unit for switching an output state of the AC power supply unit, the driving method comprising:
(A) the step of keeping the output state in a first output state from driving start until the lamp parameter satisfies a predetermined condition; and
(B) the step of switching from the first output state to a second output state by the switching unit after the lamp parameter has satisfied the predetermined condition, wherein
the square wave alternating current in the second output state includes a first asymmetrical current period T1 for melting a protrusion formed at a tip of the first electrode and growing a protrusion formed at a tip of the second electrode, and a second asymmetrical current period T2 for growing the first protrusion and melting the second protrusion, the first and second asymmetrical current periods T1 and T2 being asymmetrical square wave currents continuously or intermittently repeated in a predetermined cycle, and
asymmetry of the square wave alternating current in the first output state is smaller than that of the square wave alternating current in the second output state.

15. A high pressure discharge lamp ballast which includes an AC power supply unit for supplying a square wave alternating current to a high pressure discharge lamp including a bulb in which first and second electrodes are disposed so as to face each other, and in which the first electrode is higher in temperature than the second electrode when a current waveform is positive-negative symmetrical in a case of assuming that a current flowing from the first electrode to the second electrode is a positive current and a current flowing the other way round is a negative current, the high pressure discharge lamp ballast wherein
the AC power supply unit includes:
a DC output unit for determining a current value of the square wave alternating current; and
an AC conversion unit for controlling polarity inversion of the square wave alternating current, and
the square wave alternating current is formed by the DC output unit and the AC conversion unit so that a current-time product of the positive current would be larger than a current-time product of the negative current in a first asymmetrical current period T1 while the current-time product of the negative current would be larger than the current-time product of the positive current in a second asymmetrical current period T2, the first asymmetrical current period T1 and the second asymmetrical current period T2 being repeated in a predetermined cycle, and so that the total of current-time products of the positive current would be smaller than the total of current-time products of the negative current in one cycle of the predetermined cycle.

16. The high pressure discharge lamp ballast according to claim 15, wherein the first electrode is disposed on a neck side of a reflector, and the second electrode is disposed on an opening side of the reflector.

17. The high pressure discharge lamp ballast according to claim 15, wherein the square wave alternating current further includes a symmetrical current period Ts having a positive-negative symmetrical square wave, between the first asymmetrical current period T1 and the second asymmetrical current period T2.

18. The high pressure discharge lamp ballast according to claim 15, wherein
the AC conversion unit includes a control unit for adjusting a duty ratio between the positive current and the negative current, and
the control unit is configured so that a duty of the positive current would be larger than a duty of the negative current in the first asymmetrical current period T1 while the duty of the negative current would be larger than the duty of the positive current in the second asymmetrical current period T2, and so that an average duty of the positive current would be smaller than an average duty of the negative current in one cycle of the predetermined cycle.

19. The high pressure discharge lamp ballast according to claim 18, wherein
a duty difference between the positive current and the negative current in the first asymmetrical current period T1 is equal to a duty difference between the negative current and the positive current in the second asymmetrical current period T2, and
the first period T1 is shorter than the second period T2.

20. A projector comprising:
the ballast for driving a high pressure discharge lamp according to claim 1, 7, 8 or 15;
the high pressure discharge lamp;
a reflector; and
a case including therein the high pressure discharge lamp ballast and the reflector.
